## Europäisches Patentamt
## European Patent Office
## Office européen des brevets

(19)

(11) Veröffentlichungsnummer : **0 559 716 B1**

(12)
# EUROPÄISCHE PATENTSCHRIFT

(45) Veröffentlichungstag der Patentschrift :
26.10.94 Patentblatt 94/43

(51) Int. Cl.⁵ : **H04J 1/12, H04B 1/12**

(21) Anmeldenummer : **91920925.4**

(22) Anmeldetag : **28.11.91**

(86) Internationale Anmeldenummer :
**PCT/DE91/00929**

(87) Internationale Veröffentlichungsnummer :
**WO 92/10039 11.06.92 Gazette 92/13**

(54) **VERFAHREN UND ANORDNUNG ZUR KOMPENSIERUNG VON NACHBARKANALSTÖRUNGEN IN EINEM ZWEISEITENBAND-AMPLITUDEN-MODULATIONSSYSTEM.**

(30) Priorität : **01.12.90 DE 4038405**

(43) Veröffentlichungstag der Anmeldung :
**15.09.93 Patentblatt 93/37**

(45) Bekanntmachung des Hinweises auf die
Patenterteilung :
**26.10.94 Patentblatt 94/43**

(84) Benannte Vertragsstaaten :
**AT CH DE FR GB LI NL**

(56) Entgegenhaltungen :
**GB-A- 504 455**
**US-A- 2 140 912**

(56) Entgegenhaltungen :
**WIRELESS WORLD, Bd. 83, Nr. 1499, 1 Juli
1977, HAYWARDS HEATH GB, Seiten 55 - 57;
P.L. TAYLOR ET AL.: "Eliminating adjacent-
channel interference"**
**WIRELESS WORLD, Bd. 87, Nr. 1549, 1 Oktober
1981, COLCHESTER (GB), Seiten 79 - 83; LE-
WIS ILLINGWORTH: "A.M. receivers without
interference"**

(73) Patentinhaber : **HEINZMANN, Gustav**
**Zeuläckerstrasse 20**
**D-60389 Frankfurt (DE)**

(72) Erfinder : **HEINZMANN, Gustav**
**Zeuläckerstrasse 20**
**D-60389 Frankfurt (DE)**

(74) Vertreter : **Jeck, Anton, Dipl.-Ing.**
**Markgröninger Strasse 47/1**
**D-71701 Schwieberdingen (DE)**

EP 0 559 716 B1

## Beschreibung

Es ist grundsätzlich bekannt, niederfrequente Fernmeldesignale mehrerer Kanäle mittels Trägerfrequenzen in höherfrequente Signale umzusetzen und diese höherfrequenten Signale über einen gemeinsamen Übertragungsweg in Form einer breitbandigen Übertragungsleitung oder als Frequenzband einer Funkübertragung drahtgebunden oder drahtlos auszusenden. Dabei entsteht auf dem Übertragungsweg ein Gemisch der höherfrequenten Signale, aus dem am Ende des Übertragungswegs jedes einzelne höherfrequente Signal herausgesiebt werden muß, bevor es mittels der ihm zugeordneten Trägerfrequenz wieder in das betreffende niederfrequente Fernmeldesignal umgesetzt werden kann, ohne daß dessen Verständlichkeit behindert ist oder gar ein Übersprechen einzelner Kanäle stattfindet.

Dabei ist es gleichgültig, ob die einzelnen Kanäle in einer am Anfang eines Fernübertragungswegs liegenden gemeinsamen Endeinrichtung nebeneinander in ein vorgegebenes Übertragungsfrequenzraster eingeordnet werden, wie das bei trägerfrequenten Weitverkehrsanlagen der Fall ist, oder ob sie sich einzeln mit der ihnen zugeordneten Übertragungsfrequenz auf diesen Fernübertragungsweg aufschalten, wie das bei Vielstationsanlagen mit beliebig verteilten, gegebenenfalls auch mobilen Endstellen sowie in Kurzwellen-Funkanlagen mit unabhängig voneinander innerhalb eines vorgeschriebenen Wellenplans arbeitenden Sendern der Fall ist.

Bei jeder Umsetzung entstehen beidseitig der betreffenden Trägerfrequenz stets zwei Seitenbänder des gleichen Kanals, von denen entweder das untere oder das obere Seitenband oder sogar beide Seitenbänder ausgesendet werden können; dabei kann der Träger selbst mitübertragen werden oder aber sendeseitig unterdrückt sein, so daß ein neuer Träger gleicher Frequenz empfangsseitig wiedererzeugt werden muß, um die Rück-Umsetzung des betreffenden Kanals in das niederfrequente Fernmeldesignal vorzunehmen.

Um das zur Verfügung stehende Übertragungsband des gemeinsamen Übertragungsweges bei möglichst geringem Kanalabstand für möglichst viele Kanäle voll ausnutzen zu können, hat sich die oben genannte Einseitenbandübertragung bewährt, doch erfordert diese einen erhöhten Aufwand an hochwertigen Siebschaltungen am Ende des Übertragungsweges, um das einzige Seitenband herauszufiltern und das ursprüngliche Fernmeldesignal ohne Informationsverlust zurückzugewinnen; außerdem kann beim Einseitenbandempfang die Demodulation des Signals nicht etwa durch dessen einfache Gleichrichtung - wie beim Empfang von Zweiseitenbandschwingungen - vorgenommen werden, sondern die Demodulation erfolgt durch Multiplikation des hoch- bzw. zwischenfrequenten Signals mit einer Schwingung, deren Frequenz der des Trägers exakt gleich sein muß.

Die im Vergleich dazu einfache Technik der Zweiseitenbandempfänger war denn auch der Grund, weshalb - insbesondere im Bereich des Kurz-, Mittel-und Langwellenrundfunks - die Einseitenbandtechnik noch keinen Eingang in die international gültigen Wellenpläne finden konnte. Überdies hat die Zweiseitenbandübertragung für die Besitzer von Einseitenbandempfängern oftmals einen Vorteil: Diese können, wenn das eine Seitenband von einem Nachbarsender gestört ist, auf das andere Seitenband ausweichen, sofern dieses dann ungestört ist (Diversity-Empfang).

Daher bestehen weiterhin auch Zweiseitenbandübertragungsanlagen, bei denen jedoch gegenuber den Verhältnissen bei der Einseitenbandübertragung eine Halbierung der Kanalanzahl im Frequenzband des Übertragungsweges oder eine dieser Halbierung entsprechende Einengung der einzelnen Kanäle hinsichtlich ihrer niederfrequenten Bandbreite erforderlich ist. Wenn dagegen die weitgehend gleiche Kanalanzahl wie bei der Einseitenbandübertragung bei weitgehend gleicher Bandbreite übertragen wird, kommt es bei gleichem Kanalabstand und gleichzeitigem Senden unweigerlich zu Überlappungen der einander zugekehrten Seitenbänder zweier benachbarter Zweiseitenbandschwingungen und somit zweier Kanäle unterschiedlicher Herkunft, so daß es empfangsseitig nicht möglich ist, wenigstens das eine der Seitenbänder aus dem Gemisch der Zweiseitenbandschwingungen auszusieben und somit ungestört zu empfangen, damit es nach Hinzusetzen des zugeordneten Trägers nach dem Prinzip des Einseitenbandempfangs in das betreffende Fernmeldesignal zurückverwandelt werden kann.

Der Erfindung liegt die Aufgabe zugrunde, diese Nachteile der bekannten Fernmeldeanlagen zu vermeiden und mit einfachen Maßnahmen eine Zweiseitenbandübertragung zu ermöglichen, bei der die einander zugekehrten Seitenbänder zweier benachbarter Kanäle trotz kleinerem Trägerabstand sich zumindest teilweise überlappen dürfen, ohne daß empfangsseitig die Auswertung der Kanäle behindert ist.

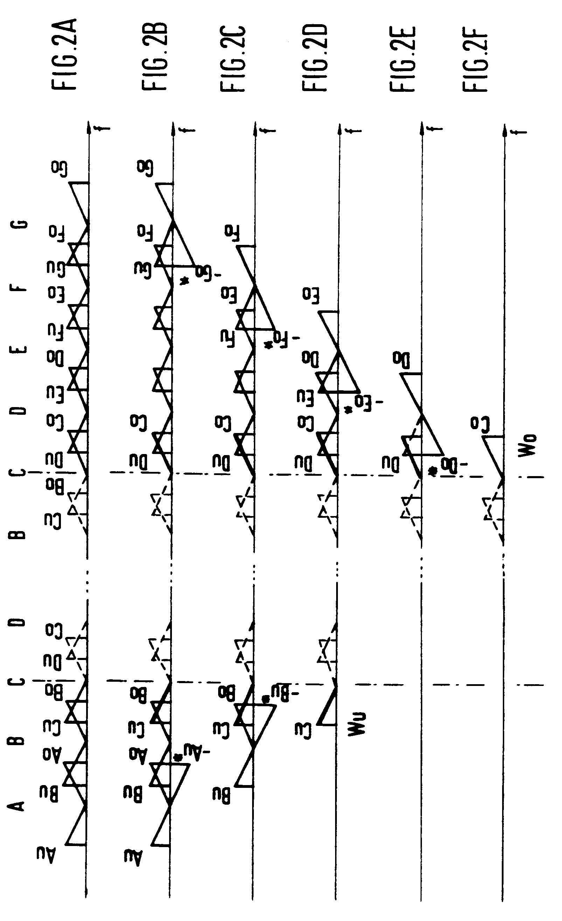

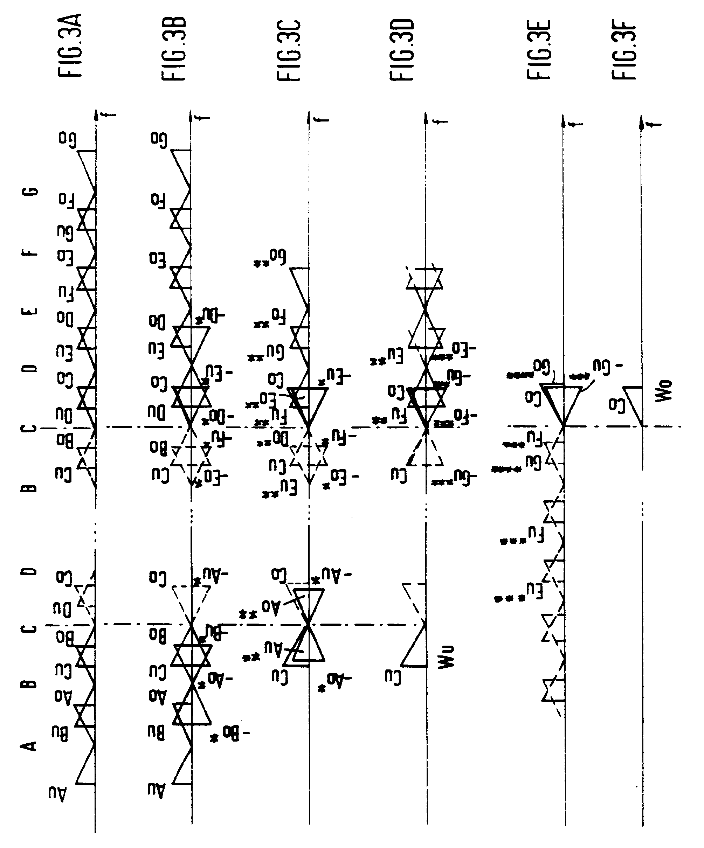

Diese Aufgabe wird erfindungsgemäß durch die in den Patentansprüchen 1 und 2 angegebenen Maßnahmen gelöst, die im Prinzip darin bestehen, daß man das störende Seitenband eines störenden Nachbarsenders mit dessen anderem Seitenband auslöscht, wobei die Methode bei Bedarf mehrfach angewendet wird. Zu dem Verfahren gemäß dem Patentanspruch 1 sei insbesondere auch auf Fig. 2, zu dem Verfahren gemäß dem Patentanspruch 2 auf Fig. 3 der anliegenden Zeichnungen hingewiesen.

Einzelheiten dieser Maßnahmen sowie Schaltungsanordnungen zu deren Durchführung sind Gegenstand der Unteransprüche.

Hierdurch ergibt sich der Vorteil, daß mindestens eines der ausgesendeten Seitenbänder so störungsarm empfangen wird, daß eine äußerst gute Auswertung des Fernmeldesignals möglich ist.

Zum Stand der Technik bezüglich der Elimination von Störsignalen sei auf folgende Druckschriften verwiesen: Durch DE 22 33 614 A1 ist eine Schaltungsanordnung zum Vermindern der systembedingten Störleistung in Codemultiplex-Übertragungsanlagen bekannt, bei der in einem Empfänger für Codemultiplex-Signale störende, nichtorthogonale Signale anderer Senderstationen dem übergeordneten Sinne nach durch Benutzung des Merkmals "nicht Codemuster des Wunschsenders" selektiert und vom Signalgemisch subtrahiert werden.

Durch DE 28 52 127 A1 ist eine Einrichtung zum Unterdrücken eines unerwünschten Signals bekannt, bei der in einem Empfänger für restseitenband-modulierte Signale (z.B. Fernsehempfänger) störende, zeitlich versetzte Signale gleicher Art (z.B. Echosignale) dem Sinne nach durch Benutzung des Merkmals "nicht zeitlich erstes Signal" selektiert und vom Signalgemisch subtrahiert werden.

Durch DE 26 22 058 A1 ist ein Verfahren zur Beseitigung des durch Umwandlung von Amplituden- in Frequenzmodulation bei der Übertragung von Nachrichten mittels FM-FDM entstehenden verständlichen Nebensprechens bekannt, bei dem in einem Empfänger für frequenzmodulierte Signale (im Rahmen eines FM-FDM-Übertragungssystems; FM-FDM = frequency modulation frequency division multiplex) die nach dem Frequenzdemodulator systembedingt zum Vorschein kommenden Störsignale "verständliches Nebensprechen" empfängerseitig ein zweites Mal erzeugt (in einem speziellen Amplitudendemodulator, der dem eigentlichen Frequenzdemodulator parallelgeschaltet ist) und dann vom Ausgangssignal des Frequenzdemodulators subtrahiert werden.

Bei allen drei Druckschriften werden zwar Störsignale durch Subtraktion des selektierten oder nachgebildeten Störsignals entfernt; um überlappende Seitenbänder frequenzbenachbarter Sender handelt es sich jedoch nicht. Die in den drei Druckschriften beschriebenen Verfahren wären zur Befreiung von störenden, überlappenden Seitenbändern auch nicht geeignet und haben mit dem Erfindungsgedanken nichts gemein, dessen Prinzip noch einmal wiederholt sei: Das störende Seitenband eines Störsenders wird mit dessen anderem Seitenband ausgelöscht, wobei dieses gleichfalls gestört sein darf, denn auch dieses kann nach der gleichen Methode entstört werden, und falls das dann löschende Seitenband gestört ist, wiederum dieses - und so fort.

Kern der Erfindung ist das Prinzip der interferenzlöschenden Überlagerung des zum gestörten Seitenband symmetrisch liegenden, jeweiligen anderen Seitenbandes und die mehrmalige Anwendung dieses Prinzips bis zum Erfolg.

Eine weitere Beschreibung, die die Eliminierung von Störsignalen betrifft, ist ein Aufsatz von P.L. Taylor "Eliminating adjacent-channel interference" in Wireless World, Bd. 83, Nr. 1499, Juli 1977, S. 55 bis 57. Dort wird folgender Fall behandelt: Es existieren ein Wunschsignal als Zweiseitenbandschwingung und ein Störsignal als Zweiseitenbandschwingung. Die Trägerschwingungen der beiden Zweiseitenbandschwingungen liegen mit ihren Frequenzen so nahe beieinander, daß die sich überlappenden Seitenbänder noch über den Träger der jeweils anderen Zweiseitenbandschwingung hinausragen in deren jeweils zweites Seitenband. Dabei müssen diese zweiten Seitenbänder frei sein von Störung; sie dürfen nicht etwa ihrerseits gestört sein von einem überlappenden Signal oben oder unten. Der Artikel nennt zwei Verfahren zur Eliminierung des Störsignals.

In dem 1. Verfahren wird die Summe von Wunschsignal und Störsignal produktdemoduliert mit einer Schwingung, deren Frequenz und deren Phase mit Frequenz und Phase der Trägerschwingung des Wunschsignals exakt übereinstimmen. Das Ergebnis ist das demodulierte Basisband des Wunschsenders, überlagert von einer störenden Zweiseitenbandschwingung, deren frequenzumgesetzte Trägerschwingung zusammen mit den beiden Seitenbändern störend in das demodulierte Basisband des Wunschsenders zu liegen kommt. Die frequenzumgesetzte Trägerfrequenz des Störers ist gleich der Differenz Trägerfrequenz des Störsignals minus Trägerfrequenz des Wunschsignals. Derjenige Teil des unteren Seitenbandes der frequenzunteren Störschwingung, der bei der Demodulation mathematisch negativ wird, erscheint dabei - an der Frequenz Null gespiegelt - von Null an aufwärts. Der Klarheit halber sei festgestellt, daß das demodulierte Basisband des Wunschsenders hingegen - wie bei jeder Synchrondemodulation - die gleichphasige Summe der beiden gleich großen und sich positiv addierenden Seitenbänder des Wunschsignals darstellt. Dieses Basisband nun ist störend überlagert von der beschriebenen Zweiseitenbandschwingung mit dem gespiegelten Teil. Von letzterer das demodulierte Basisband zu befreien, ist die Aufgabe, die das Verfahren 1 von Taylor sich gestellt hat. Die Aufgabe wird dadurch gelöst, daß in einem zweiten Signalpfad die ursprüngliche Summe von Wunschsignal und Störsignal zunächst mit dem um 90° phasenverschobenen Träger des Wunschsenders produktdemoduliert wird, wodurch - wie von Quadratur-Modulationssystemen bekannt - das Wunschsignal gelöscht wird und das Störsignal übrig bleibt und anschließend das Störsignal nochmals mit einer speziellen Rechteckschwingung multipliziert wird derart, daß die genannte Zweiseitenbandschwingung mit dem gespiegelten Teil zustande kommt, die dann von dem gestörten demodulierten Basisband des ersten Signalpfads subtrahiert wird.

Die Besonderheit der Vorgehensweise nach Taylor besteht in der Gestaltung und Erzeugung der speziellen Rechteckfunktion, wodurch auch der gespiegelte Teil phasen- und vorzeichenrichtig erhalten wird. Bei einer bloßen Multiplikation mit einer Sinusschwingung oder einer normalen Rechteckfunktion wäre dies nicht der Fall.

Wie man erkennt, arbeitet das Verfahren immer mit kompletten Zweiseitenbandschwingungen. Daraus folgt, daß, wie schon oben zum Ausdruck gebracht, bei dem 1. Verfahren von Taylor das zu eliminierende Störsignal nicht nur eine komplette Zweiseitenbandschwingung sein muß, sondern auch seinerseits nicht gestört sein darf durch ein weiteres Störsignal auf einem seiner Seitenbänder.

Bei dem 2. Verfahren nach Taylor wird die Summe von Wunschsignal und Störsignal produktdemoduliert mit der um 90° phasenverschobenen Trägerschwingung des Störsignals. Das Störsignal wird dadurch elimiminiert; denn die Demodulationsprodukte des oberen und des unteren Seitenbandes sind dann zwei Basisbänder entgegengesetzten Vorzeichens, die sich gegenseitig auslöschen - ein Sachverhalt, wie er auch von Quadratur-Modulationssystemen bekannt ist. Übrig bleibt das frequenzumgesetzte Wunschsignal - dieses aber mit einer Trägerfrequenz, die gleich der Differenz Trägerfrequenz des Störsignals minus Trägerfrequenz des Wunschsignals ist. Auch diese Zweiseitenbandschwingung enthält einen gespiegelten Teil. Eine normale Demodulation ist also nicht möglich. Dieses Kunststück vollbringt auch hier eine spezielle Rechteckschwingung, mit der zwecks Demodulation multipliziert wird, im Prinzip dieselbe wie beim 1. Verfahren, nur daß es sich jetzt um eine gegenüber dem Nullpunkt symmetrische Funktion handelt, während die Rechteckfunktion des 1. Verfahrens bezüglich des Nullpunktes schiefsymmetrisch war.

Auch für das 2. Verfahren von Taylor gilt, daß das Störsignal auf' keinem seiner Seitenbänder durch ein weiteres Signal gestört sein darf.

Genau das kann aber die hier vorliegende Erfindung. Ihr Kern besteht darin, daß Verfahren angegeben werden, die eine Entstörung des Wunschsignals auch im Falle eines ganzen "Ensembles" sich überlappenden Zweiseitenbandschwingungen bewirken. Die Verfahren von Taylor berücksichtigen nur den Fall eines einzigen störenden Signals.

Es wird darauf hingewiesen, daß je nach Übertragungsweg die beiden senderseitig gleichen Seitenbänder der jeweils gleichen Zweiseitenbandschwingung wegen der unterschiedlichen Phasenlaufzeiten bei der Wellenausbreitung empfangsseitig nicht immer völlig gleich sind, wodurch im Einzelfalle die jeweils umgesetzten Seitenbänder die störenden Seitenbänder nicht völlig auszulöschen vermögen, somit also keine vollständige Kompensation der betreffenden Störungen erreicht werden kann; deshalb ist nachstehend auch nur von weitgehend ungestörten Seitenbändern am Ende einer Kompensation die Rede. Diese ist aber für das Auswerten der betreffenden Zweiseitenbandschwingung ausreichend und ist allen bisher bekannten Verfahren überlegen, bei denen man den auszuwertenden Frequenzbereich auf eine so geringe Breite einengt, daß kein Seitenband eines unerwünschten Nachbarsenders störend in das eine oder andere Seitenband der auszuwertenden Zweiseitenbandschwingung hineinragt. Ein derart eingeengter, zur Demodulation gelangender Frequenzbereich - zwar störungsarm, aber schmalbandig - ist von großem Nachteil, insbesondere hinsichtlich des Verlustes von Signalinformationen, z.B. von qualitativen Signalanteilen.

Zugunsten des Erfindungsgedankens soll auch noch auf folgendes hingewiesen werden: Es gibt auch Übertragungswege, auf denen die Seitenbänder mit praktisch gleicher Phasenlaufzeit beim Empfänger ankommen, wo infolgedessen eine vollständige Störkompensation möglich ist, z.B. bei der Kabelübertragung oder bei der Funkübertragung ohne räumliche oder atmosphärische Behinderungen, also ohne Beugung oder Reflexion der Wellen.

Grundsätzlich dürfte es sinnvoll sein, nur das weniger mit Reststörungen behaftete Seitenband nach dem Prinzip des Einseitenbandempfangs auszuwerten, da das Auswerten von unterschiedlich mit Reststörungen behafteten Seitenbändern nach dem Prinzip des Zweiseitenbandempfangs zu Auswertefehlern führen kann, die den Vorteil des Auswertens zweier vorhandener Seitenbänder wieder in Frage stellen können.

Weiterhin ist aus der nachstehenden Beschreibung des Verfahrens leicht verständlich, daß die Überlappungen zwar bis in die Mitte der benachbarten Zweiseitenbandschwingungen gehen können, daß sie aber nicht über diese hinausgehen dürfen, da sich dann keine Kompensation eines bestimmten Seitenbands mit Hilfe des mit negativem Vorzeichen versehenen und in die gleiche Frequenzlage umgesetzten, anderen Seitenbandes der gleichen Zweiseitenbandschwingung durchführen läßt.

Anlaß der Erfindung war zunächst der bekannte und auch heute noch bestehende Mißstand, daß beim Empfang von zweiseitenbandmodulierten Kurzwellensendern die Trägerfrequenzen der Sender vielfach so nahe beieinander liegen, daß sich die Seitenbänder überlappen. Dies hat zur Folge, daß man sich zwecks störungsarmen Empfangs genötigt sieht, mit schmaler Bandbreite zu empfangen, was den Nachteil hat, daß die höheren Frequenzen des zu empfangenden Tonfrequenzspektrums abgeschnitten werden. Vor Einführung des Genfer Wellenplanes bestand der gleiche Mißstand auch im Mittel- und Langwellenbereich, und gelegentlich besteht er dort auch heute noch, wenn sich einzelne Sendestationen undiszipliniert verhalten und ein Modulationsband ausstrahlen, das breiter als die international vereinbarte Bandbreite von 9 kHz ist.

Die Erfindung ist nicht nur für Amplitudenmodulation, sondern auch für andere Formen der Modulation brauchbar, und zwar immer dann, wenn es ein oberes und ein unteres Seitenband gibt und die beiden Seitenbänder symmetrisch zueinander sind, also auch für Sender mit Frequenzmodulation kleinen Modulationsindexes und für Sender mit digitaler Modulation, sofern deren Modulationsband durch zwei symmetrisch zueinander liegende gleichartig aufgebaute Seitenbänder darstellbar ist.

Weiterhin gilt die Erfindung nicht nur für die Funkübertragung, sondern auch für die leitungsgebundene Übertragung. Auch für eine Trägerfrequenztechnik, die statt mit Einseitenbandmodulation mit voneinander getrennten Seitenbändern mit einer Zweiseitenbandmodulation mit sich überlappenden Seitenbändern arbeiten würde, wäre sie einsetzbar, und sie ist auch von der physikalischen Natur des Trägers unabhängig. Wegen dieses hohen Allgemeinheitsgrades der Erfindung sprechen die Patentansprüche neutral von "Schwingungen".

Die Erfindung wird nun anhand der in den Zeichnungen dargestellten Ausführungsbeispiele näher erläutert. Es zeigt:

Fig. 1      den Aufbau eines innerhalb eines hochfrequenten Übertragungsbandes liegenden, sogenannten Ensembles aus mehreren Zweiseitenbandschwingungen, deren Trägerfrequenzen einander benachbart sind, wobei die einander zugekehrten Seitenbänder sich zumindest teilweise überlappen, während die Seitenbänder am oberen und unteren Ende des Ensembles - gemeint sind die vom Ensemble abgekehrten Seitenbänder - ungestört sind,

Fig. 2      die nacheinander erfolgenden einzelnen Kompensationsschritte beim Aussieben des unteren sowie des oberen Seitenbandes einer innerhalb des Ensembles nach Fig. 1 liegenden Zweiseitenbandschwingung gemäß dem Verfahren nach Anspruch 1; dabei sind in Fig. 2a die Zweiseitenbandschwingungen A bis G in einer Gruppe rechts und einer Gruppe links zum Teil wiederholt dargestellt, um in den Schritten darunter gemäß Fig. 2b bis 2f zwei verschiedene Wege der Entstör-Kompensation demonstrieren zu können,

Fig. 3      die gleichzeitig erfolgenden einzelnen Kompensationsschritte beim Aussieben des unteren sowie des oberen Seitenbandes einer innerhalb des Ensembles nach Fig. 1 liegenden Zweiseitenbandschwingung gemäß dem Verfahren nach Anspruch 2; dabei sind in Fig. 3a die Zweiseitenbandschwingungen A bis G in einer Gruppe rechts und einer Gruppe links zum Teil wiederholt dargestellt, um in den Schritten darunter gemäß Fig. 3b bis 3f zwei verschiedene Wege der Entstör-Kompensation demonstrieren zu können,

Fig. 4      eine Schaltungsanordnung zur Durchführung des Verfahrens nach den Anspruch 1,

Fig. 5      die Art und Weise der Kompensation einer störenden Zweiseitenbandschwingung nach Durchlaufen eines Mischers gemäß der Schaltungsanordnung nach Fig. 4,

Fig. 6      eine weitere Schaltungsanordnung zur Durchführung des Verfahrens nach Anspruch 1, durch die Rauschen weitgehend vermieden wird,

Fig. 7      eine weitere Schaltungsanordnung zur Durchführung des Verfahrens nach Anspruch 1, die zum Erzielen einer noch besseren Entstör-Kompensation bei weitgehend vermiedenem Rauschen Regler aufweist, und

Fig. 8      den Aufbau eines bei der Schaltungsanordnung nach Fig. 7 verwendbaren Reglers.

Der Begriff "Ensemble" spielt in der Erfindung eine besondere Rolle. Daher soll er zunächst exakt definiert werden. "Ensemble" heißt eine Folge frequenzbenachbarter, sich überlappender Zweiseitenbandschwingungen, die zwei Eigenschaften hat:

1. Die äußersten Seitenbänder an den beiden Enden des Ensembles sind ungestört.

2. Die Überlappungen von Seitenbändern innerhalb des Ensembles dürfen jeweils maximal nur bis zur Trägerfrequenz der benachbarten Zweiseitenbandschwingung reichen, bzw. - falls es keinen Träger gibt - bis zu derjenigen Frequenz, zu der die Seitenbänder symmetrisch angeordnet sind.

Hier soll nochmals auf den Fortschritt hingewiesen werden, den die Erfindung bringt: Sender, deren ausgesandte Zweiseitenbandschwingungen sich gegenseitig überlappen - mit seitherigen Mitteln ungestört nur schmalbandig zu empfangen - können mit den Mitteln der Erfindung nunmehr weitgehend störungsfrei mit ihrem vollen Frequenzband empfangen werden, wenn die Zweiseitenbandschwingungen dieser Sender zusammen ein solches Ensemble bilden. "Mit ihrem vollen Frequenzband empfangen" heißt aber, daß das Basisband, mit dem die Trägerfrequenz des Wunschsenders ursprünglich moduliert worden ist, dem Demodulator des Empfängers ungeschmälert zugeführt wird.

Zur Vermeidung von Mißverständnissen soll noch folgendes klargestellt werden: "Ensemble" ist nicht etwa ein ganzes "offizielles" Band, etwa das 49-m-Band, sondern ein Ensemble beginnt - in Richtung ansteigender Frequenzen betrachtet - mit dem ersten Sender, dessen unteres Seitenband nach unten hin ungestört ist, und

EP 0 559 716 B1

endet mit dem Sender, dessen oberes Seitenband nach oben hin ungestört ist.

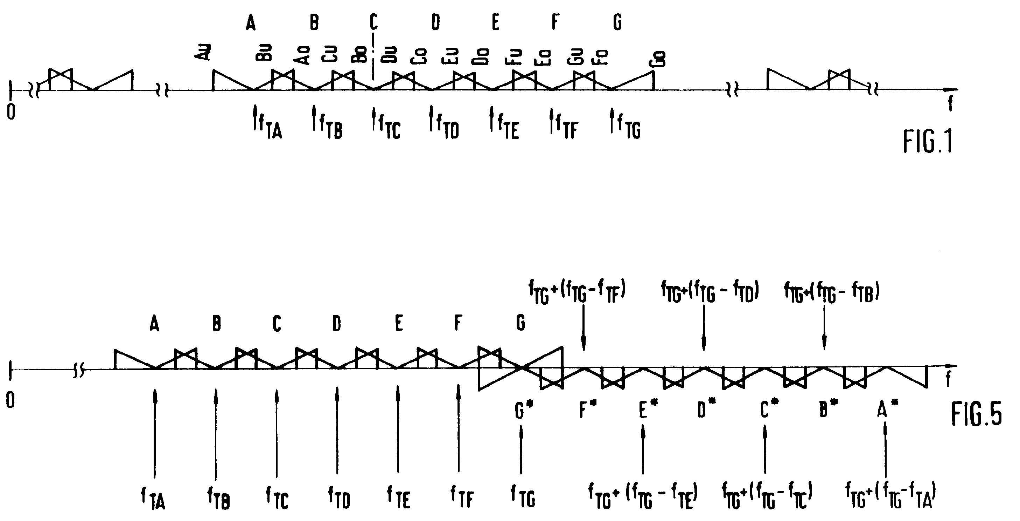

Das in Fig. 1 dargestellte Ensemble enthält die Zweiseitenbandschwingungen A bis G, deren einander zugekehrte Seitenbänder Ao und Bu bis Fo und Gu sich paarweise überlappen, so daß keines der Seitenbänder einer der auszuwertenden Zweiseitenbandschwingungen B bis F störungsfrei empfangen werden kann; nur die äußeren Seitenbänder Au und Go sind ungestört und können zum Auswerten der Seitenbandschwingungen A oder G herangezogen werden. Neben dem dargestellten Ensemble mögen noch nicht dargestellte weitere Zweiseitenbandschwingungen vorhanden sein, deren Seitenbänder jedoch die Seitenbänder Au und/oder Go nicht überlappen und daher für die Erfindung unwesentlich sind. Die Überlappung ist hier zur besseren Verständlichkeit zwar nur als eine partielle Überlappung gezeichnet, darf jedoch durchaus bis an die Mitte der Zweiseitenbandschwingung und somit bis an die Trägerfrequenz derselben heranreichen; allerdings darf sie diese Mitte nicht überschreiten, da dann die Erfindung nicht anwendbar ist, wie sich aus untenstehenden Überlegungen noch ergeben wird. Der Einfachheit halber sind in Fig. 1 einheitliche Trägerfrequenzabstände dargestellt; die folgenden Ausführungen gelten jedoch auch für uneinheitliche Trägerfrequenzabstände.

Der für das Verfahren nach der Erfindung zu nutzende Sender mit einem ungestörten Seitenband kann - von dem gewünschten, zu empfangenden Sender aus gesehen - einige Nachbarkanäle tiefer liegen als der gewünschte, zu empfangende Sender; er kann auch einige Nachbarkanäle höher liegen. Hier hat man eine Wahlmöglichkeit. Im allgemeinen wird man dasjenige ungestörte Seitenband als Beginn des Ensembles wählen, von dem aus die kleinste Anzahl von Umsetzungen bis zum gewünschten Sender hin erforderlich ist.

In den nachfolgenden Betrachtungen wird der Wunschsender, d.h. die zum Empfang gewünschte Zweiseitenbandschwingung, allgemein mit W bezeichnet. Wu ist deren unteres Seitenband und Wo ist deren oberes Seitenband.

Aus Fig. 2 ist ein erstes Verfahren ersichtlich, wie das untere Seitenband Wu oder das obere Seitenband Wo der beidseitig gestörten Zweiseitenbandschwingung W, hier der Zweiseitenbandschwingung C aus Fig. 1, im Ensemble zwischen dem ungestörten unteren Seitenband Au und dem gestörten unteren Seitenband Wu = Cu bzw. im Ensemble zwischen dem ungestörten oberen Seitenband Go und dem gestörten oberen Seitenband Wo = Co zumindest weitgehend störungsfrei ausgesiebt werden können. Der Sender mit dem ungestörten Seitenband - sei es der am unteren Ende des Ensembles, sei es der am oberen Ende des Ensembles - spielt in dem Verfahren nach der Erfindung eine entscheidende Rolle.

Im vorliegenden Beispiel, bei dem die zum Empfang gewünschte Zweiseitenbandschwingung W = C sein soll, ist der Sender mit einem ungestörten unteren Seitenband der zweitnächste in Richtung niedrigerer Frequenzen, der Sender mit einem ungestörten oberen Seitenband der viertnächste in Richtung höherer Frequenzen. Es bieten sich daher zwei Möglichkeiten an, entweder das untere Seitenband Wu oder aber das obere Seitenband Wo auszusieben:

**(a) Aussieben des unteren Seitenbandes Wu**

(siehe linken Teil von Fig. 2)

Hierzu wird das ungestörte untere Seitenband Au in Fig. 2a durch Mischung mittels eines geeigneten Trägers unter Vorzeichenänderung in die Frequenzlage des störenden oberen Seitenbandes Ao umgesetzt und als Seitenband -Au* in Fig. 2b von den einander störenden Seitenbändern Bu + Ao abgezogen. Es ergibt sich das nun weitgehend ungestörte untere Seitenband Bu in Fig. 2c (1. Kompensation). Um das noch immer gestörte untere Seitenband Cu als ausgesiebtes unteres Seitenband Wu zu erhalten, wird das nun weitgehend ungestörte untere Seitenband Bu durch Mischung mittels eines anderen geeigneten Trägers wiederum unter Vorzeichenänderung in die Frequenzlage des störenden oberen Seitenbandes Bo umgesetzt und als Seitenband -Bu* in Fig. 2c von den einander störenden Seitenbändern Cu + Bo abgezogen. Es ergibt sich das nun weitgehend ungestörte untere Seitenband Cu in Fig. 2d (2. Kompensation). Dieses ist bereits das auszusiebende untere Seitenband Wu der auszuwertenden Zweiseitenbandschwingung W, das nun nach dem Prinzip des Einseitenbandempfangs ausgewertet werden kann (Demodulation).

**(b) Aussieben des oberen Seitenbandes Wo**

(siehe rechten Teil von Fig. 2)

Hierzu wird das ungestörte obere Seitenband Go in Fig. 2a durch Mischung mittels eines geeigneten Trägers unter Vorzeichenänderung in die Frequenzlage des störenden unteren Seitenbands Gu umgesetzt und als Seitenband -Go* in Fig. 2b von den einander störenden Seitenbändern Fo + Gu abgezogen.
Es ergibt sich das nun weitgehend ungestörte obere Seitenband Fo in Fig. 2c (1. Kompensation).

Dieses nun weitgehend ungestörte obere Seitenband Fo wird durch Mischung mittels eines anderen geeigneten Trägers unter Vorzeichenänderung in die Frequenzlage des störenden unteren Seitenbands Fu umgesetzt und als Seitenband -Fo* in Fig. 2c von den einander störenden Seitenbändern Eo + Fu abgezogen. Es ergibt sich das nun weitgehend ungestörte obere Seitenband Eo in Fig. 2d (2. Kompensation).

Dieses nun weitgehend ungestörte obere Seitenband Eo wird durch Mischung mittels eines anderen geeigneten Trägers unter Vorzeichenänderung in die Frequenzlage des störenden unteren Seitenbandes Eu umgesetzt und als Seitenband -Eo* in Fig. 2d von den einander störenden Seitenbändern Do + Eu abgezogen. Es ergibt sich das nun weitgehend ungestörte obere Seitenband Do in Fig. 2e (3. Kompensation).

Um das noch immer gestörte obere Seitenband Co als ausgesiebtes oberes Seitenband Wo zu erhalten, wird das nun weitgehend ungestörte obere Seitenband Do durch Mischung mittels eines anderen geeigneten Trägers unter Vorzeichenänderung in die Frequenzlage des störenden unteren Seitenbandes Du umgesetzt und als Seitenband -Do* in Fig. 2e von den einander störenden Seitenbändern Co + Du abgezogen. Es ergibt sich das nun weitgehend ungestörte obere Seitenband Co in Fig. 2f (4. Kompensation). Dieses ist das auszusiebende obere Seitenband Wo der auszuwertenden Zweiseitenbandschwingung W, das nun nach dem Prinzip des Einseitenbandempfangs ausgewertet werden kann (Demodulation). Bei gleichzeitigem Aussieben beider Seitenbänder Wu und Wo der auszuwertenden Zweiseitenbandschwingung W können diese auch nach dem Prinzip des Zweiseitenbandempfangs ausgewertet werden (Demodulation).

Aus Fig. 3 ist ein zweites Verfahren ersichtlich, wie das untere Seitenband Wu oder das obere Seitenband Wo der beidseitig gestörten Zweiseitenbandschwingung W, hier der Zweiseitenbandschwingung C aus Fig. 1, im Ensemble zumindest weitgehend störungsfrei ausgesiebt werden kann und zwar entweder (im linken Teil von Fig. 3 dargestellt) im Ensembleteil zwischen dem unteren Ende des ungestörten unteren Seitenbandes Au und dem trägerseitigen Beginn des gestörten unteren Seitenbandes Wu = Cu oder (im rechten Teil von Fig. 3 dargestellt) im Ensembleteil zwischen dem oberen Ende des ungestörten oberen Seitenbandes Go und dem trägerseitigen Beginn des gestörten oberen Seitenbandes Wo = Co.

Vor der Beschreibung dieses zweiten Verfahrens sollen zunächst dessen einzelne Schritte in einem Gedankenexperiment anschaulich durchgespielt werden.

Man stelle sich vor, es sei ein nicht automatisierter Kurzwellenempfänger zu bedienen. Am Abstimm-Drehknopf stellt man zunächst den gewünschten Sender ein. Dieser erweise sich jedoch als gestört, sowohl durch das untere Seitenband des nächsten frequenzhöheren Senders, als auch durch das obere Seitenband des nächsten frequenztieferen Senders. Ein Drehen des Abstimmknopfes nach rechts und nach links zeige, daß auch die weiteren frequenzbenachbarten Sender höherer und niedrigerer Frequenz sich mit ihren Seitenbändern mehr oder weniger gegenseitig überlappen. Man löscht daraufhin das den Wunschsender störende untere Seitenband des nächsten frequenzhöheren Senders mit dessen oberem Seitenband. Wie die erste Erkundung schon ergeben hatte, als am Abstimmknopf nach rechts und nach links gedreht wurde, ist jedoch auch dieses obere Seitenband des Störsenders, das zur Löschung benutzt werden soll, gestört; in vorliegendem Beispiel vom unteren Seitenband des zweitnächsten frequenzhöheren Senders. Wenn man damit löscht, eliminiert man zwar damit den ersten Störsender, schleppt jedoch gleichzeitig die Interferenz des gestörten zweiten Nachbarsenders mit ein.

Man gibt aber nun nicht auf und löscht dieses eingeschleppte interferierende Seitenband mit dessen zugeordnetem oberen Seitenband. Aber auch dieses Seitenband sei gestört, hier vom unteren Seitenband des drittnächsten frequenzhöheren Senders. Man löscht auch dieses Seitenband, und zwar durch das obere Seitenband des drittnächsten frequenzhöheren Senders. Doch auch dieses Seitenband erweise sich als gestört: vom unteren Seitenband des viertnächsten Senders. Man Löscht auch dieses störende Seitenband: mit dem oberen Seitenband des viertnächsten Senders. Dieses erweise sich als ungestört. Die Interferenzlöschung gelingt. Man befindet sich nun am Ende des Ensembles.

Man könnte sich jetzt zufriedengeben. Es möge jedoch so sein, daß man Reststörungen durch unvollkommene Löschungen feststellt. Man versucht daher Löschungen auf der anderen Seite, d.h. in dem Frequenzband, dessen Frequenzen kleiner sind als die Trägerfrequenz unseres Wunschsenders. Theoretisch - wenn man es von der ersten Erkundung her nicht anders wüßte - könnte man natürlich Glück haben mit dem bloßen Einseitenbandempfang des unteren Seitenbandes des Wunschsenders. Dies sei aber nicht der Fall; denn es interferiere das obere Seitenband des nächsten frequenzniedrigeren Senders. Man löscht mit dessen anderem Seitenband, seinem unteren Seitenband. Und dieses sei im vorliegenden Beispiel ungestört: Dort beginnt also das Ensemble von dieser Seite her betrachtet. Angesichts dieser einzig notwendigen Löschung sieht man sich am Ziel und bleibt nunmehr auf der frequenzniedrigeren Seite des Wunschsenders.

Auch bei diesem Verfahren bieten sich daher zwei Möglichkeiten an, entweder das untere Seitenband Wu oder aber das obere Seitenband Wo aussieben.

Es folgt nun die Beschreibung dieses zweiten Verfahrens anhand von Fig. 3, wobei - im Gegensatz zum Gedankenexperiment -mit dem einfacheren Fall begonnen wird:

### (a) Aussieben des unteren Seitenbandes Wu

(siehe linken Teil der Fig. 3)

Hierzu wird das seinerseits selbst gestörte untere Seitenband Bu einschließlich des störenden oberen Seitenbandes Ao in Fig. 3a durch Mischung mittels eines geeigneten Trägers unter Vorzeichenänderung in die Frequenzlage des störenden oberen Seitenbandes Bo umgesetzt und als Seitenband -Ao* -Bu* von den Seitenbändern Cu + Bo in Fig. 3b abgezogen. Es ergibt sich nun ein durch das Seitenband -Ao* gestörtes unteres Seitenband Cu in Fig. 3c (1. Kompensation).

Gleichzeitig wird aber auch das ungestörte, untere Seitenband Au in Fig. 3a durch Mischung mittels eines anderen geeigneten Trägers ohne Vorzeichenänderung in die Frequenzlage des störenden Seitenbandes -Ao* umgesetzt. Dieses positive Seitenband Au** in Fig. 3c wird dann von dem mit negativem Vorzeichen versehenen Seitenband -Ao* überlagert mit der Folge, daß Au** und -Ao* sich aufheben. Es ergibt sich so das nun weitgehend ungestörte untere Seitenband Cu in Fig. 3d (2. Kompensation). Dieses ist bereits das auszusiebende untere Seitenband Wu der auszuwertenden Zweiseitenbandschwingung W, die nun nach dem Prinzip des Einseitenbandempfangs ausgewertet werden kann (Demodulation).

### (b) Aussieben des oberen Seitenbandes Wo

(siehe rechten Teil der Fig. 3)

Hierzu wird das seinerseits selbst gestörte obere Seitenband Do einschließlich des dieses störenden unteren Seitenbandes Eu in Fig. 3a durch Mischung mittels eines geeigneten Trägers unter Vorzeichenänderung in die Frequenzlage des störenden unteren Seitenbandes Eu umgesetzt und als Seitenband -Do* -Eu* von den Seitenbändern Co und Du in Fig. 3b abgezogen. Es ergibt sich ein nun durch das Seitenband -Eu* gestörtes oberes Seitenband Co in Fig. 3c (1. Kompensation).

Gleichzeitig wird aber auch das seinerseits selbst gestörte obere Seitenband Eo in Fig. 3a durch Mischung mittels eines anderen geeigneten Trägers ohne Vorzeichenänderung in die Frequenzlage des störenden Seitenbands -Eu* umgesetzt. Dieses positive Seitenband Eo** + Fu** in Fig. 3c wird von dem mit negativem Vorzeichen versehenen Seitenband -Eu* überlagert. Es ergibt sich ein nun durch das Seitenband Fu** gestörtes oberes Seitenband Co in Fig. 3d (2. Kompensation).

Gleichzeitig wird aber auch das seinerseits selbst gestörte obere Seitenband Fo in Fig. 3a durch Mischung mittels eines anderen geeigneten Trägers diesmal wieder unter Vorzeichenänderung in die Frequenzlage des störenden Seitenbandes Fu** umgesetzt. Dieses negative Seitenband -Fo*** -Gu*** wird dem positiven Seitenband Fu** in Fig. 3d überlagert. Es ergibt sich ein nun durch das Seitenband -Gu*** gestörtes oberes Seitenband Co in Fig. 3e (3. Kompensation).

Gleichzeitig wird schließlich aber auch das ungestörte obere Seitenband Go in Fig. 3a durch Mischung mittels eines anderen, geeigneten Trägers diesmal wieder ohne Vorzeichenänderung in die Frequenzlage des störenden Seitenbandes -Gu*** umgesetzt. Dieses positive Seitenband Go**** in Fig. 3e wird dem mit negativem Vorzeichen versehenen Seitenband -Gu*** überlagert. Es ergibt sich das nun weitgehend ungestörte obere Seitenband Co in Fig. 3f (4. Kompensation).

Dieses ist das auszuwertende obere Seitenband Wo der auszuwertenden Zweiseitenbandschwingung W, die nun nach dem Prinzip des Einseitenbandempfanges ausgewertet werden kann (Demodulation).

Bei gleichzeitigem Aussieben beider Seitenbänder Wu und Wo der auszuwertenden Zweiseitenbandschwingung W können diese auch nach dem Prinzip des Zweiseitenbandempfanges ausgewertet werden (Demodulation).

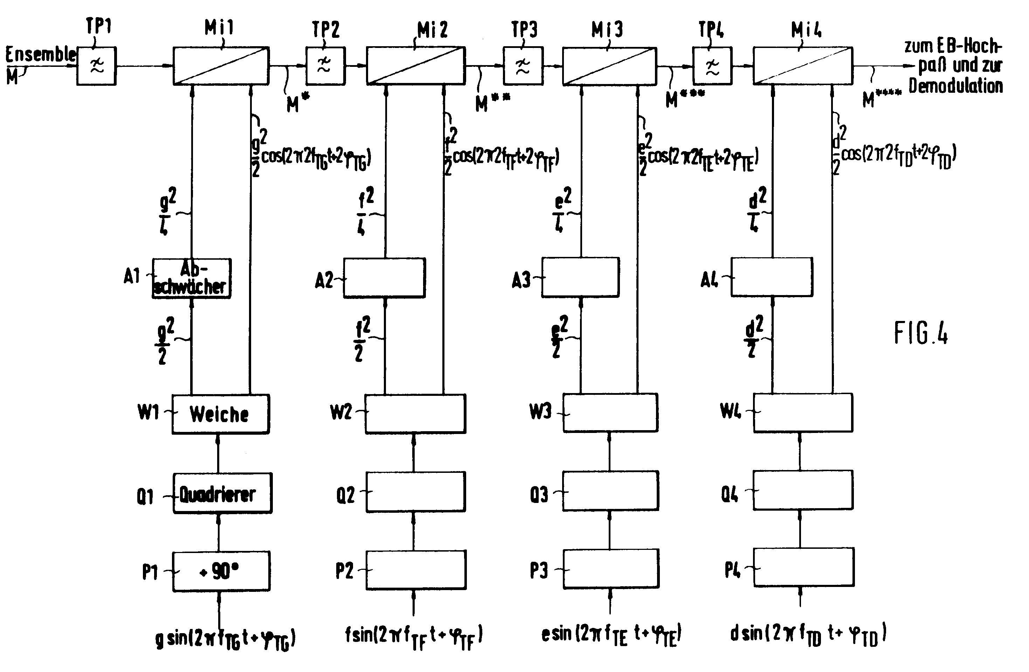

Die in Fig. 4 dargestellte Schaltungsanordnung dient zum Durchführen des anhand von Fig. 2 erläuterten Verfahrens einer nacheinander erfolgenden Kompensation störender Seitenbänder nach dem Patentanspruch 2.

Die Anordnung enthält die Mischer Mi1 bis Mi4. Es wird wieder angenommen, daß ein Ensemble aus höchstens 7 Zweiseitenbandschwingungen A,B, C,D, E,F,G besteht. Dann ist die Schaltungsanordnung für vier Kompensationen auszulegen. Liegt der Wunschsender nämlich genau in der Mitte des Ensembles, besteht nach beiden Seiten hin ein Bedarf von drei Kompensationen; liegt der Wunschsender ein Kanal neben der Mitte (wie beispielsweise C), können nach der einen Seite hin zwei, nach der anderen Seite hin vier Kompensationen erforderlich werden. Läge der Wunschsender zwei Kanäle neben der Mitte, könnten nach der einen Seite hin eine Kompensation, nach der anderen Seite hin fünf Kompensationen ins Auge gefaßt werden; in diesem Falle würde man aber für die Störbefreiung mit Sicherheit die Seite mit der nur einen Kompensation wählen. Fünf Kompensationen kommen also nie in Betracht. Folglich ist (bei sieben angeommenen Zweiseitenbandschwingungen eines Ensembles), die angenommene Zahl von maximal vier Kompensationen die richtige Zahl für die Auslegung der Schaltungsanordnung.

Bevor das Ensemble in den Mischer Mi1 geht, muß es einen Tiefpaß TP1 durchlaufen, in welchem das Frequenzband am oberen Ende des Ensembles scharf abgeschnitten wird. Das obere Seitenband der Zweiseitenbandschwingung G darf dabei selbst weder beschnitten noch partiell gedämpft, noch in der Phasenlage seiner oberen Randschwingungen verändert werden; sonst funktioniert bereits die erste Kompensation nicht vollständig und deren Fehler pflanzen sich in den weiteren Kompensationen fort.

Andererseits stellt dieser Tiefpaß - gemessen an den bei Einseitenband-Empfang sonst notwendigen beiden Pässen (Tiefpaß und Hochpaß bzw. zusammengefaßt Bandpaß) - keinen Mehraufwand dar. Der außerhalb der Schaltungsanordnung sonst erforderlich gewesene Einseitenband-Tiefpaß kann dann nämlich entfallen.

Dem Mischer Mi1 wird sodann das Gemisch der Zweiseitenbandschwingungen, das Ensemble, zugeführt, das die gestörte Zweiseitenbandschwingung des Wunschsenders enthält.

Nachstehend werden die Mischvorgänge zunächst formelmäßig in Amplitudenschreibweise statt in der anschaulichen Betrachtung der Seitenbänder behandelt, um sicherzustellen, daß alle Überlegungen bezüglich Vorzeichen und Phase richtig sind und die Kompensationen tatsächlich stattfinden. $\hat{a}$ bis $\hat{g}$ bedeuten die Amplituden von A bis G.

Das Ensemble M = A+B+C+D+E+F+G lautet dann

$$\hat{a} \sin (2 \pi f_{TA}t + \varphi_{TA})$$
$$+ \hat{b} \sin (2 \pi f_{TB}t + \varphi_{TB})$$
$$+ \hat{c} \sin (2 \pi f_{TC}t + \varphi_{TC})$$
$$+ \hat{d} \sin (2 \pi f_{TD}t + \varphi_{TD})$$
$$+ \hat{e} \sin (2 \pi f_{TE}t + \varphi_{TE})$$
$$+ \hat{f} \sin (2 \pi f_{TF}t + \varphi_{TF})$$
$$+ \hat{g} \sin (2 \pi f_{TG}t + \varphi_{TG})$$

Die Trägerschwingungen lauten entsprechend:

$$a \sin (2\pi f_{TA}t + \varphi_{TA})$$
$$b \sin (2\pi f_{TB}t + \varphi_{TB})$$
$$c \sin (2\pi f_{TC}t + \varphi_{TC})$$
$$d \sin (2\pi f_{TD}t + \varphi_{TD})$$
$$e \sin (2\pi f_{TE}t + \varphi_{TE})$$
$$f \sin (2\pi f_{TF}t + \varphi_{TF})$$
$$g \sin (2\pi f_{TG}t + \varphi_{TG})$$

Wenn die Zweiseitenbandschwingung C weitgehend entstört empfangen werden soll, dann sind in die Schaltungsanordnung - von den Ensembleenden her aufgezählt - entweder die Trägerschwingungen

$$a \sin (2\pi f_{TA}t + \varphi_{TA})$$
$$b \sin (2\pi f_{TB}t + \varphi_{TB})$$

oder die Trägerschwingungen

$$g \sin (2\pi f_{TG}t + \varphi_{TG})$$
$$f \sin (2\pi f_{TF}t + \varphi_{TF})$$
$$e \sin (2\pi f_{TE}t + \varphi_{TE})$$
$$d \sin (2\pi f_{TD}t + \varphi_{TD})$$

einzuspeisen, die vorher zu gewinnen sind. Die frequenzgenaue und phasenrichtige Gewinnung von Trägerschwingungen ist gemäß dem Stande der Technik heutzutage kein Problem mehr und mit nicht allzu großem Aufwand möglich.

In Fig. 4 ist der kompliziertere und maximale Fall, die Kompensation von G bis D, aufgenommen.

Durch Einschalten einer entsprechenden Frequenzumsetzung (Wenden) - in die Figur nicht eingezeichnet - kann mit der gleichen Schaltungsanordnung auch die Entstör-Kompensation von der anderen Seite her, über A und B, erfolgen, wobei die Trägerschwingungen

$$a \sin (2\pi f_{TA}t + \varphi_{TA})$$

und

$$b \sin (2\pi f_{TB}t + \varphi_{TB})$$

einzuspeisen sind.

Die Trägerschwingungen werden zunächst in den Phasenschiebern P1 bis P4 um 90° vorverschoben (oder alle um 90° zurückverschoben). Diese Phasenverschiebung ist notwendig, damit bei den Mischvorgängen in Mi1 bis Mi4 die entsprechenden Mischprodukte mit entgegengesetztem Vorzeichen auftreten und sich kompensieren.

Die phasenverschobenen Trägerschwingungen

$$g \cos (2\pi f_{TG}t + \varphi_{TG})$$
$$f \cos (2\pi f_{TF}t + \varphi_{TF})$$

$$e \cos (2\pi f_{TE} t + \varphi_{TE})$$
$$d \cos (2\pi f_{TD} t + \varphi_{TD})$$

gehen sodann in die Quadrierer Q1 bis Q4, aus denen folgende Schwingungen herauskommen:

$$\frac{g^2}{2} \cos (2\pi 2 f_{TG} t + 2\varphi_{TG}) + \frac{g^2}{2}$$

$$\frac{f^2}{2} \cos (2\pi 2 f_{TF} t + 2\varphi_{TF}) + \frac{f^2}{2}$$

$$\frac{e^2}{2} \cos (2\pi 2 f_{TE} t + 2\varphi_{TE}) + \frac{e^2}{2}$$

$$\frac{d^2}{2} \cos (2\pi 2 f_{TD} t + 2\varphi_{TD}) + \frac{d^2}{2}$$

d.h. Cosinusschwingungen der jeweils doppelten Trägerfrequenz und eines jeweils verdoppelten Träger-Phasenwinkels, die von einem Gleichanteil

$$\frac{g^2}{2}, \frac{f^2}{2}, \frac{e^2}{2} \text{ oder } \frac{d^2}{2}$$

begleitet sind. Die Gleichanteile spielen bei den Mischvorgängen in den Mischern Mi1 bis Mi4 eine besondere Rolle.

In den Weichen W1 bis W4 werden die Gleichanteile jeweils von ihren Schwingungen abgetrennt und in einstellbaren Abschwächern A1 bis A4, z.B. einstellbaren Potentiometern, auf die Hälfte ihres Betrages vermindert.

In die Mischer Mi1 bis Mi4 gehen infolgedessen folgende mischenden Schwingungen mit zugehörigen Gleichanteilen hinein:

$$\frac{g^2}{2} \cos (2\pi 2 f_{TG} t + 2\varphi_{TG}) + \frac{g^2}{4}$$

$$\frac{f^2}{2} \cos (2\pi 2 f_{TF} t + 2\varphi_{TF}) + \frac{f^2}{4}$$

$$\frac{e^2}{2} \cos (2\pi 2 f_{TE} t + 2\varphi_{TE}) + \frac{e^2}{4}$$

$$\frac{d^2}{2} \cos (2\pi 2 f_{TD} t + 2\varphi_{TD}) + \frac{d^2}{4}$$

Die Abschwächer sind aus folgendem Grund erforderlich:

Die Gleichanteile einerseits und die Schwingungen doppelter Trägerfrequenz andererseits haben die Aufgabe, in den Mischern Produkte der Multiplikation hervorzubringen, die sich aufheben. Letzteres können die Produkte aber nur, wenn sie nicht nur entgegengesetztes Vorzeichen tragen, sondern auch gleich groß sind. Bei der Multiplikation einer Schwingung mit einer Schwingung bilden sich gemäß den trigonometrischen Formeln ein frequenzoberes und ein frequenzunteres Mischprodukt, deren jedes den Faktor 1/2 trägt. Bei der Multiplikation einer Schwingung mit einem Gleichanteil hingegen findet eine solche Halbierung nicht statt. Im Hinblick auf die Kompensation muß der Gleichanteil daher vorher auf die Hälfte abgeschwächt werden, was aber keine Belastung für die Einfachheit des Verfahrens nach der Erfindung darstellt; denn sowohl die Weichen als auch die Abschwächer sind einfache Schaltelemente.

An die Quadrierer Q1 bis Q4 werden gleichfalls keine hohen Genauigkeitsanforderungen gestellt; wenn der aus ihnen herauskommende Gleichanteil gegenüber der Amplitude der erzeugten Schwingung doppelter Trägerfrequenz abweicht, so läßt sich diese Abweichung mittels der einstellbaren Abschwächer ausgleichen. Als Quadrierer kann man Multiplizierer verwenden, in deren beide Eingänge man mit den Trägerfrequenzschwingungen hineingeht. Man kann aber auch Quadrierer der Analogrechentechnik nehmen, d.h. die dort üblichen Diodennetzwerke, die eine annähernd parabelförmige Kennlinie aufweisen. Dabei genügen Ausführungsformen geringen Aufwandes, weil Abweichungen von einer mathematisch exakten Quadrierung gleichermaßen den Gleichanteil und den Proportionalitätsfaktor der Schwingung betreffen; diese Abweichungen heben sich bei der Kompensation auf.

Die Mischer Mi1 bis Mi4 sind eigentlich Multiplizierer, d.h. sie müssen wegen des genannten Gleichanteils bezüglich ihres einen Eingangs bis zur Frequenz Null hinab arbeiten. Es kommt jedoch nicht darauf an, ob der mischende Gleichanteil wegen eines etwaigen Frequenzganges etwas benachteiligt oder bevorzugt ist. Auch dies kann durch die einstellbaren Abschwächer ausgeglichen werden, die übrigens nur einmal - bei der Fertigung - eingestellt zu werden brauchen.

Aus dem Mischer Mi1 kommt ein Mischprodukt M* heraus, das unter Zugrundelegung der trigonometrischen Formel $\sin \alpha \cos \beta = 1/2 \sin (\alpha + \beta) + 1/2 \sin (\alpha - \beta)$ aus folgenden Teilprodukten besteht:

aus dem Folgeprodukt der Zweiseitenbandschwingung G, die ausgelöscht werden soll

$$\hat{g}\,\frac{g^2}{4}\ \sin\ (2\ \pi f_{TG}t\ +\ 2\ \pi 2 f_{TG}t\ +\ \varphi_{TG}\ +\ 2\varphi_{TG})$$

$$+\ \hat{g}\,\frac{g^2}{4}\ \sin\ (2\ \pi f_{TG}t\ -\ 2\ \pi 2 f_{TG}t\ +\ \varphi_{TG}\ -\ 2\varphi_{TG})$$

$$+\ \hat{g}\,\frac{g^2}{4}\ \sin\ (2\ \pi f_{TG}t\ +\ \varphi_{TG})$$

sowie aus dem Folgeprodukt der Zweiseitenbandschwingung C, die letztlich empfangen werden soll

$$\hat{c}\,\frac{g^2}{4}\ \sin\ (2\ \pi f_{TC}t\ +\ 2\pi\ 2 f_{TG}t\ +\ \varphi_{TC}\ +\ 2\varphi_{TG})$$

$$+\ \hat{c}\,\frac{g^2}{4}\ \sin\ (2\pi f_{TC}t\ -\ 2\ \pi 2 f_{TG}t\ +\ \varphi_{TC}\ -\ 2\varphi_{TG})$$

$$+\ \hat{c}\,\frac{g^2}{4}\ \sin\ (2\pi f_{TC}t\ +\ \varphi_{TC})$$

sowie aus den Folgeprodukten von A,B, D,E,F analog C, wobei die Indices TC durch die Indices TA, TB, TD, TE, TF zu ersetzen sind.

Die jeweils erste Formelreihe ist zu streichen, da sich - wie man nach der Zusammenfassung aller Teilprodukte erkennt - in allen Fällen ein Mischprodukt mit der dreifachen bzw. ungefähr dreifachen Trägerfrequenz ergibt. Die aufwärts gemischten Zweiseitenbandschwingungen liegen aber völlig jenseits des Einseitenband-Hochpasses, der sich an die Schaltungsanordnung anschließt, bevor demoduliert wird.

Bei der jeweils zweiten Formelreihe erkennt man das Argument als negativ. Macht man dieses gemäß der Formel $\sin\ (-\ \alpha)\ =\ -\ \sin\ \alpha$ positiv, bekommt die zweite Formelreihe - physikalisch dessen Amplitude - negatives Vorzeichen, was wiederum anschaulich bedeutet: In der Seitenband-Darstellung erhalten die Seitenbänder negatives Vorzeichen.

Die jeweils dritte Formelreihe ist eine Reproduktion von A, B, C, D, E, F oder G, hervorgebracht durch den Gleichanteil $\frac{g^2}{4}$.

Beim Folgeprodukt von G stellen wir die gewünschte Löschung von G fest: die zweite und die dritte Formelreihe sind formelmäßig gleich, wobei die zweite das erwünschte negative Vorzeichen trägt, während die dritte die positive Reproduktion von G aus dem Ensemble darstellt, der wir vorsorglich durch den genannten Abschwächer den gleichen Proportionalitätsfaktor $\frac{g^2}{4}$ gegeben haben.

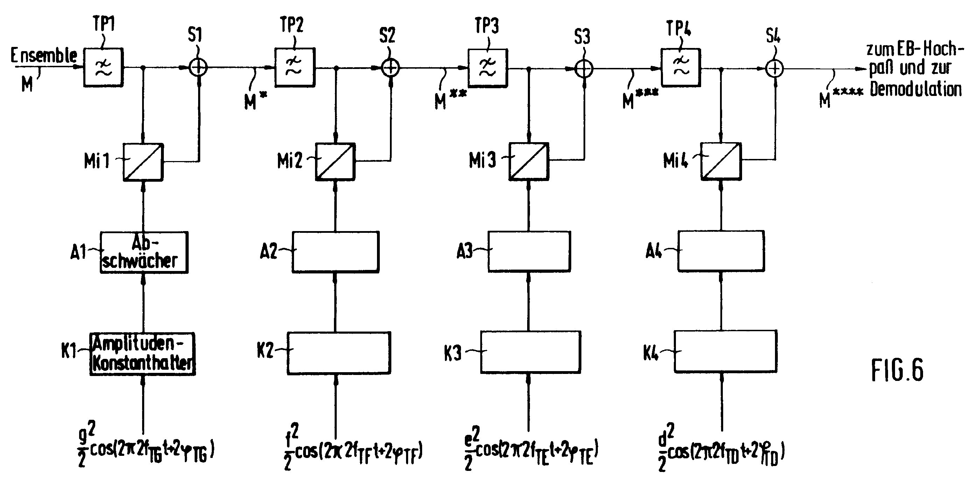

Fig. 5 zeigt das Mischprodukt M* als Spektrum in Zweiseitenband-Darstellung. Man erkennt, wie
1. das Mischen des Ensembles das Ensemble erneut reproduziert - als Folge des beschriebenen mischenden Gleichanteils,
2. das Mischen des Ensembles ein zweites frequenzversetztes Ensemble hervorbringt, genauer: ein "negativ gewendetes" Ensemble - als Folge der beschriebenen, zur Mischung verwendeten Cosinus-Schwingung mit der doppelten Trägerfrequenz von G,
3. beide Teilprodukte sich beim Mischvorgang im gewünschten Sinne vorzeichengerecht, d.h. sich auslöschend, überlagern.

"Negativ gewendet" heißt: Jede Schwingung mit einer Frequenz unterhalb von $f_{TG}$ erscheint als negatives Spiegelbild oberhalb von $f_{TG}$. Die Zweiseitenbandschwingungen G und G* löschen sich dabei aus.

Bevor das Mischprodukt M* in den Mischer Mi2 geht, muß das gespiegelte Ensemble durch einen zwischen den Zweiseitenbandschwingungen F und F* liegenden Tiefpaß TP2 abgetrennt werden, der aber wegen der geringen erforderlichen Flankensteilheit einfach aufgebaut sein kann, da zwischen F und F*, wie in Fig. 5 ersichtlich, wegen der Löschung von G durch G* doppelter Kanalabstand (z.B. 2 x 9 kHz = 18 kHz) besteht. Solche doppelten Kanalabstände ergeben sich auch bei den nachfolgenden Mischungen zwischen E und E* sowie zwischen D und D*.

Als Folge dieser doppelten Kanalabstände existiert folgender vorteilhafter Sachverhalt: Auch dann, wenn die Trägerfrequenzabstände der Zweiseitenbandschwingungen des Ensembles uneinheitlich und beim Empfang eines anderen Ensembles dann anders verteilt sind, funktionieren die einmal bei der Fertigung auf die Streuungsbreite der vorkommenden Trägerfrequenzabstände eingestellten Tiefpässe immer noch. Auch vor den Mischern Mi3 und Mi4 befinden sich solche unproblematischen Tiefpässe, die mit TP3 und TP4 bezeichnet sind.

Das Mischprodukt M* geht nun in den Mischer Mi2. Dort spielen sich die gleichen Mischvorgänge wie in Mi1 ab, in Mi3 und Mi4 ebenso. Das aus dem Mischer Mi4 herauskommende Schwingungsgemisch M**** besteht dann nur noch aus den Zweiseitenbandschwingungen A,B und C, wobei das obere Seitenband von C nunmehr entstört ist und im Einseitenbandempfang ausgewertet werden kann. Dabei werden, wie bei dieser Empfangsart üblich, die Zweiseitenbandschwingungen A und B durch einen Hochpaß (EB-Hochpaß) mit der Grenzfrequenz $f_{TC}$ abgetrennt.

Auf den besonderen Vorzug der vorgeschlagenen Schaltungsanordnung sei ausdrücklich hingewiesen: Diese funktioniert auch dann, wenn die Zweiseitenbandschwingungen uneinheitlichen Trägerfrequenzabstand haben. Gerade im Kurzwellenbereich kommt dies sehr häufig vor.

Oben wurde angegeben, daß man die Befreiung von Interferenzen mit Hilfe von Mischvorgängen und interferenzlöschenden Überlagerungen sowohl auf die frequenzhöheren als auch auf die frequenzniedrigeren Nachbarsender anwenden kann. Bei gleichzeitigem Begehen beider Wege könnte man somit den Wunschsender auch als Zweiseitenbandschwingung demodulieren. Diese Möglichkeit ist in den Patentansprüchen auch beansprucht.

Dennoch kann sie nach derzeitigem Erkenntnisstand nur bedingt empfohlen werden, weil man dann die Fehler der Entstör-Kompensationen beider Seiten erhält, während man bei Einseitenbandempfang die Seite mit dem geringeren Fehler der Entstör-Kompensation bevorzugen kann.

Die ursprünglichen, auf Einseitenbandempfang zugeschnittenen Verfahren können verallgemeinert werden; es gibt viele denkbare Möglichkeiten: Die Interferenzen löschenden Überlagerungen können im Hochfrequenzteil, in den Zwischenfrequenzteilen oder auch im Niederfrequenzteil stattfinden; die Vorgänge können auch zwischen den verschiedenen Empfängerteilen aufgeteilt durchgeführt werden, und es können sowohl Aufwärtsmischungen als auch Abwärtsmischungen, ja sogar Demodulationen stattfinden.

Es sind reine Formen von "Interferenzenlöschung gleichzeitig" und von "Interferenzenlöschung nacheinander" sowie Mischformen denkbar. Dabei gibt es elegante Lösungen, bei denen - wie bei der angegebenen Schaltungsanordnung außer den für Einseitenbandempfang sowieso erforderlichen Pässen - keine Tiefpässe, Hochpässe oder Bandpässe erforderlich sind, und es gibt andere, bei denen Pässe oder eine höhere Anzahl von Mischungen notwendig werden.

Kern der Erfindung ist das Prinzip der interferenzlöschenden Überlagerung des zum gestörten Seitenband symmetrisch liegenden, jeweiligen anderen Seitenbandes und die mehrmalige Anwendung dieses Prinzips bis zum Erfolg.

Die Schaltungsanordnung Fig. 4 hat einen Vorzug, der besonders hervorgehoben werden soll:
Die Genauigkeit der Kompensation ist unabhängig von etwaigen Amplitudenschwankungen der in P1 bis P4 eingespeisten Trägerschwingungen.

Diese Unabhängigkeit wird erfindungsgemäß dadurch erreicht, daß die Kompensationen nicht in Summationsstellen hinter den Mischern stattfinden, sondern in den Mischern selbst beim Multiplikationsvorgang, wobei der Gleichanteil vorher exakt abgeglichen worden ist.

Wenn nun aus irgendeinem Grund die Amplituden der Trägerschwingungen schwanken, so schwanken sowohl der jeweils in einen Mischer hineingehende Gleichanteil als auch der jeweils hineingehende Wechselanteil. Beide Anteile schwanken zueinander proportional. Dies hat zur Folge, daß die entstörende Kompensation mit der gleichen Genauigkeit stattfindet wie ohne Schwankung. Diese Genauigkeit, die man sich ja extrem hoch wünscht, wird in den Abschwächern A1 bis A4 bei der Fertigung einmal eingestellt und bleibt dann auch für alle Zukunft so bestehen, da die Abschwächer so gewählt werden können, daß sie unter normalen Bedingungen weder temperatur- noch alterungsabhängig sind (z.B. fest eingestellte, fixierte Potentiometer).

Die Schaltungsanordnung Fig. 4 verursacht indes bei der Entstörung der Zweiseitenbandschwingung etwas Rauschen. Hierzu muß man sich zunächst klarmachen, daß aus jedem Mischer das restliche Ensemble reproduziert wieder herauskommt. Diese Reproduktion ist das gewollte Ergebnis eines Mischvorganges. In jedem Mischer entsteht aber leider auch etwas Rauschen, das in die Reproduktion eingeht. Das aus einem Mischer herauskommende Restensemble ist infolgedessen nicht nur, wie beabsichtigt, von einer störenden Zweiseitenbandschwingung befreit, sondern auch - da reproduziert - von etwas Rauschen des Mischers begleitet, wobei - und das ist das Wesen des kleinen Nachteils - dieses Rauschen sich über den ganzen Frequenzbereich des jeweils reproduzierten Restensembles erstreckt, also nicht etwa nur über die Seitenbandteile, die sich überlappt hatten und dann entstört wurden. Die Rauschanteile summieren sich mit jedem weiteren Mischvorgang. Sie sind zwar nicht sehr groß; beim Entwurf eines Empfängers muß man sie jedoch in Rechnung setzen. Ihre Summe ist umso höher, je mehr Kompensationen, d.h. je mehr Mischvorgänge hintereinander stattfinden. Hinter Mi1 ist sie am kleinsten, hinter Mi4 ist sie im Vergleich dazu viermal so groß.

Dem Verrauschen der ungestörten, sich nicht überlappenden Bandteile kann man entgehen, indem man auf die Reproduktionen verzichtet und statt dessen das Ensemble bzw. die Restensembles durchgängig bestehen läßt und sie keine aktiven elektronischen Operationen, wie das Multiplizieren, durchlaufen läßt. Vom Ensemble bzw. den Restensembles werden dann lediglich sukzessive die störenden Zweiseitenbandschwingungen subtrahiert.

Diese Vorgehensweise ist in Fig. 6 dargestellt. Die abgebildete Schaltungsanordnung hat eine Bedeutung in den Fällen, in denen man aufgrund der übrigen Schaltung des Empfängers sagen kann, daß die Trägerschwingungsamplituden nicht schwanken werden bzw. daß die Schwankungen hinsichtlich ihrer Wirkung nicht ins Gewicht fallen. Man kann sie auch durch automatische Amplituden-Konstanthalter auf einem festen Wert halten. Hierfür sind gemäß dem Stande der Technik einfache Möglichkeiten bekannt.

Man kann aber auch einen anderen Weg gehen:

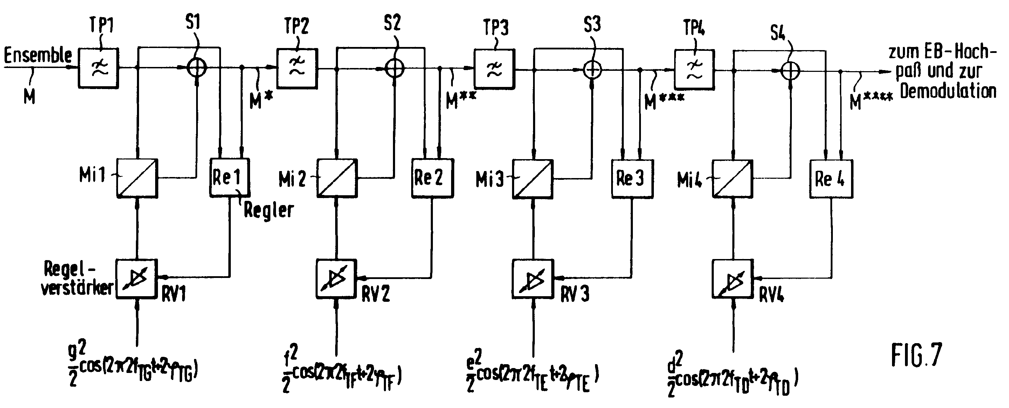

Man läßt die Amplitudenschwankungen zu, subtrahiert jedoch die jeweils zur Interferenzlöschung benutzte Zwseitenbandschwingung über eine Regelschleife. Dieses Ausführungsbeispiel ist in Fig. 7 dargestellt. Diese Schaltungsanordnung ist wie die der Fig. 6 rauscharm und hat, da geregelt, den zusätzlichen Vorzug extrem genauer Entstör-Kompensationen.

Zu den Schaltungsanordnungen Fig. 6 und Fig. 7 sollen nun Erläuterungen hinsichtlich der Wirkungsweise gegeben werden.

## Zu Schaltungsanordnung Fig. 6

Wie bei Schaltungsanordnung Fig. 4 geht das Ensemble M als erstes in den Tiefpaß TP1 hinein. Hinter Summationsstellen S1 bis S4, welche auf die Mischer Mi1, Mi2 und Mi3 folgen, findet man die entstörten Restensembles M*, M** und M*** und hinter Mi4 schließlich die entstörte Einseitenbandschwingung M**** des Wunschsenders. Man erkennt, wie das Ensemble und die nachfolgenden Restensembles nur passive Glieder, nämlich Tiefpässe und Summationsstellen, durchlaufen.

Die Erzeugung der mischenden, frequenzverdoppelten Trägerschwingungen erfolgt durch Quadrierer wie in Schaltungsanordnung Fig. 4. Die Weichen W1 bis W4 werden zu Hochpässen, die die Frequenz Null, d.h. die Gleichanteile ausscheiden. Gleichanteile gibt es danach keine mehr, mit der Folge, daß auch die Abschwächer für die Gleichanteile entfallen. Die Phasenschieber P1 bis P4 können gleichfalls entfallen, da die trigonometrischen Formeln $\sin^2 \alpha = \dfrac{1}{2} - \dfrac{1}{2} \cos 2\alpha$ und $\cos^2 \alpha = \dfrac{1}{2} + \dfrac{1}{2} \cos 2\alpha$ besagen, daß nach Ausscheiden des Gleichanteils sich das Quadrat einer Sinusschwingung von dem Quadrat einer Cosinusschwingung nur durch das Vorzeichen unterscheidet, so daß es also genügt, die nicht-phasenverschobenen Trägerschwingungen zu quadrieren und sie mit entgegengesetzter Polarität in die Mischer einzuspeisen. Die geschilderten Einzelheiten zur Erzeugung der mischenden, frequenzverdoppelten Trägerschwingungen sind in Fig. 6 nicht eingezeichnet, da es hier darum geht, das Prinzip der entstörenden Kompensationen darzustellen. Hingegen wurden Amplituden-Konstanthalter K1 bis K4 für die frequenzverdoppelten Trägerschwingungen eingezeichnet, die bei der gerätemäßigen Verwirklichung der Schaltungsanordnung vorhanden sein können oder auch nicht. Hiermit sollte die für das Arbeitsprinzip der Schaltungsanordnung Fig. 6 notwendige zuverlässige Amplitudenkonstanz der frequenzverdoppelten Trägerschwingungen zum Ausdruck gebracht werden.

Die entstörenden Kompensationen finden in den Summationsstellen S1 bis S4 statt. Auch hier ist ein Abgleich notwendig. Vor den Mischern Mi1 bis Mi4 - bevor die frequenzverdoppelten Trägerschwingungen (in Fig. 6 von unten kommend) in sie hineingehen - sitzen daher die Abschwächer A1 bis A4 (z.B. Potentiometer), die bei der Fertigung fest eingestellt werden oder vom Benutzer des Gerätes nachgestellt werden können.

## Zu Schaltungsanordnung Fig. 7

Hier sind die Abschwächer A1 bis A4, wie sie in Schaltungsanordnung Fig. 6 zu finden sind, durch geregelte Verstärker ersetzt, deren Regelspannungen von den automatischen Reglern Re1 bis Re4 korrigiert werden. In die Regler Re1 bis Re4 gehen die erzielten Kompensationsergebnisse, wie sie hinter den Summationsstellen S1 bis S4 bestehen, hinein: die jeweiligen entstörten Restensembles. In einen zweiten Eingang der Regler Re1 bis Re4 gehen die Ensembles, wie sie vor der jeweiligen Summationsstelle, d.h. vor der Kompensation bestanden, hinein. Die Regler Re1 bis Re4 ermitteln jeweils die Abweichung von der erwünschten vollkommenen Kompensation und schicken je nach Ergebnis ein vorzeichengerechtes Signal als Stellgröße in die Regelverstärker RV1 bis RV4, beispielsweise eine positive oder negative Gleichspannung, die den Verstärkungsfaktor des jeweiligen Verstärkers so verstellt, daß der Fehler der Kompensation exakt null wird. Dabei bestehen - und das ist wichtig - in den Reglern elektronische und schaltungstechnische Möglichkeiten, welche in dem Signalpfad mit den Summationsstellen nicht bestehen würden, weil in den Reglern keine Rücksicht auf Vermeidung von Rauschen genommen werden muß.

Der Aufwand für die Regler ist klein. Wie ein solcher Regler aussehen kann, zeigt

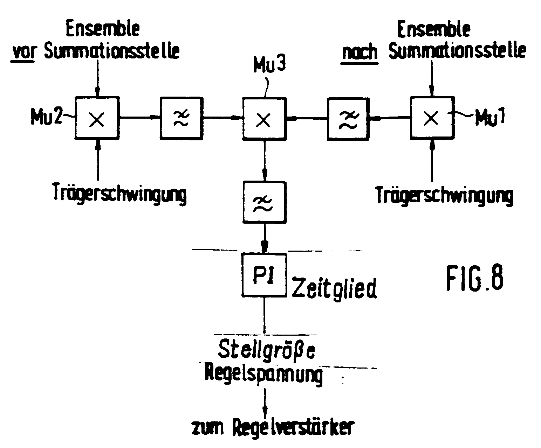

## Schaltungsanordnung Fig. 8.

Deren Wirkungsprinzip besteht darin, daß das vor der Summationsstelle bestehende Ensemble bzw. Restensemble einerseits und das nach der Summationsstelle bestehende Restensemble andererseits in getrennten Multiplizierern demoduliert werden, wobei zu dieser Produktdemodulation jeweils die Trägerschwingung der zu löschenden Zweiseitenbandschwingung verwendet wird, und daß anschließend die beiden niederfrequenten Schwingungsgemische in die beiden Eingänge eines weiteren Multiplizierers gegeben werden. Das aus diesem Multiplizierer herauskommende Produkt ist ein Schwingungsgemisch mit einem Gleichanteil, welcher

negativ ist, wenn der Kompensationsfehler darin besteht, daß die löschende Zweiseitenbandschwingung größer ist als die zu löschende,

positiv ist, wenn der Kompensationsfehler darin besteht, daß die löschende Zweiseitenbandschwingung kleiner ist als die zu löschende,

null ist, wenn der Kompensationsfehler null ist.

Dieser Gleichanteil, mittels Tiefpaß aus dem letztgenannten Schwingungsgemisch ausgesiebt, wird über ein Zeitglied dem Regelverstärker als dessen Regelspannung zugeführt.

Die drei Multiplizierer der Regler können von einfachster Bauart sein und brauchen keine Ansprüche an Linearität zu erfüllen.

Nachstehend wird beschrieben, wie der Regler im einzelnen funktioniert, wobei zur Beschreibung die Begriffe und Benennungen der deutschen Norm DIN 19 226 ("Regelungs- und Steuerungstechnik, Begriffe und Benennungen") verwendet werden, mit Ausnahme des unten geprägten Begriffes "Ersatz-Regelabweichung".

Regelgröße (die zu regelnde Größe) ist die Differenz der zu löschenden und der löschenden Seitenbandschwingung. Der Sollwert dieser Regelgröße ist null. Null als Sollwert ist die Besonderheit der vorliegenden Regelungsaufgabe; dadurch kann der sonst in Regelkreisen erforderliche Vergleicher entfallen, mit dem üblicherweise die Regelabweichung gebildet wird. Die Regelabweichung besteht (wie die Regelgröße) in der Differenz der zu löschenden und der löschenden Seitenbandschwingung; diese Regelabweichung auf null zu bringen, ist die Aufgabe der Regelung. Die Regelabweichung wird unmittelbar hinter der Summationsstelle entnommen und geht dann - begleitet von dem übrigen Schwingungsgemisch, wie es hinter der Summationsstelle besteht - in den Regler hinein.

In dieser Form ist die Regelabweichung jedoch nicht brauchbar. Dies ersehen wir aus dem in Fig. 5 dargestellten Fall der sich kompensierenden Seitenbandschwingungen mit der Trägerfrequenz $f_{TG}$. Die sich kompensierenden Seitenbandschwingungen überlappen - was sie ja auch sollen - das obere Seitenband von F. Die Regelabweichung selbst ist also gestört: hier durch das obere Seitenband von F.

Wir müssen daher eine Ersatzgröße für die Regelabweichung finden,

die exakt null ist, wenn die eigentliche Regelabweichung null ist,

die ein bestimmtes Vorzeichen trägt, wenn das zu löschende Seitenband größer ist als das löschende,

die das entgegengesetzte Vorzeichen trägt, wenn das zu löschende Seitenband kleiner ist als das löschende.

Diese Ersatzgröße wird gebildet, indem man das gesamte Schwingungsspektrum, wie es hinter der Summationsstelle besteht, durch Produktdemodulation mit der jeweiligen Trägerfrequenz demoduliert. Diese Produktdemodulation findet in dem Multiplizierer Mu1 der Fig. 8 statt, zu dem auch der nachgeschaltete Tiefpaß gehört (der jedoch lediglich die übliche Aufgabe hat, das bei einer Produktdemodulation auftretende frequenzobere Mischprodukt auszusperren).

Das genannte Schwingungsspektrum, bevor es in Mu1 demoduliert wird, hat die Eigenschaft, daß es punktsymmetrisch zur entsprechenden Trägerfrequenz ist. In dem Beispiel der Fig. 5 kehrt jede Schwingung unterhalb von $f_{TG}$ spiegelbildlich oberhalb von $f_{TG}$ wieder: gleich groß, aber mit entgegengesetztem Vorzeichen. Diese Punktsymmetrie ist ja dadurch entstanden, daß man zu dem vor einer Summationsstelle bestehenden Ensemble bzw. Restensemble in der Summationsstelle dasselbe Ensemble bzw. Restensemble in gewendeter Form, gleich groß und mit entgegengesetztem Vorzeichen hinzugefügt hat. Im jeweils vorliegenden Fall erstreckt sich das Spektrum von der Trägerfrequenz des Wunschsenders bis zur jeweiligen Trägerfrequenz des Ensembleendes oder Restensembleendes und anschließend gespiegelt bis zur gespiegelten Trägerfrequenz des Wunschsenders. Ein punktsymmetrisches Spektrum hat die Eigenschaft, daß sein Demodulationsprodukt exakt null ist, wenn man mit der Trägerschwingung, zu der die Symmetrie besteht, gleichphasig demoduliert, und hat außerdem die gewünschte Eigenschaft, daß bei Störung der Symmetrie - je nachdem, ob das Spiegelbild größer ist als das Bild oder aber umgekehrt - Demodulationsprodukte entgegengesetzter Vorzeichen auftreten. Eine solche Demodulation nehmen wir in dem Multiplizierer Mu1 der Fig. 8 vor. So kommt hinter dem Tiefpaß nach Mu1 eine Ersatzgröße für die Regelabweichung heraus.

Aus dieser gilt es, die Stellgröße zu bilden. Die Ersatz-Regelabweichung ist ein bei der Frequenz null beginnendes Schwingungsgemisch. Dieses muß man nun gleichrichten. Spitzengleichrichtung kommt nicht in Frage, da dabei das Vorzeichen verloren ginge. Aus diesem Grund wird in Fig. 8 das genannte Schwingungsgemisch in einen Multiplizierer Mu3 geschickt, in dessen zweiten Eingang das in einem Modulator Mu2 demodulierte Ensemble bzw. Restensemble, wie es vor der Summationsstelle besteht, hineingeht. Das Ergebnis dieser erneuten Mischung ist ein Schwingungsgemisch, dessen Gleichanteil in dem nach Mu3 folgenden Tiefpaß

**14**

ausgesiebt wird. Dieser Gleichanteil geht dann in ein Zeitglied, beispielsweise in ein PI-Glied. Dessen Ausgangsspannung stellt vorzeichengerecht die gewünschte Stellgröße dar, die den Regelverstärker RV verstellt.

**Zusammenfassende Bewertung**

Schaltungsanordnung Fig. 6 ist rauscharm und erfordert den geringsten Aufwand. Ob die angestrebte Störbefreiung von Störungen seitenbandüberlappender Nachbarsender ausreicht, hängt von der übrigen Schaltung des Empfängers ab. Eine Störbefreiung mittlerer Qualität kann auf jeden Fall mit Amplituden-Konstanthaltern für die frequenzverdoppelten Trägerschwingungen erreicht werden.

Schaltungsanordnung Fig. 4 bietet eine hohe und zuverlässige Störbefreiung, liefert aber etwas mehr Rauschen.

Schaltungsanordnung Fig. 7 bietet sowohl hohe Rauscharmut als auch - da mit geregelter Entstör-Kompensation ausgestattet - hohe und zuverlässige Störbefreiung.

Rückblickend wird nun auch die Störbefreiung bewertet, wie sie oben gemäß dem Patentanspruch 2 anhand von Fig. 3 beschrieben worden ist. Hierfür war keine Schaltungsanordnung angegeben worden, obwohl man gerade hierfür elegant einfache Schaltungen entwerfen kann.

Der Grund liegt in zwei Nachteilen, die dieses Verfahren hat:

1. Alle der Störbefreiung dienenden Mischvorgänge verrauschen auch hier nicht nur die überlappenden und zu entstörenden Seitenbandteile - was verfahrensbedingt unvermeidlich ist - sondern, wie bei der Schaltungsanordnung Fig. 4, den ganzen Frequenzbereich des zu empfangenden Einseitenbandes des Wunschsenders. Die Art und Weise, wie das Rauschen entsteht, ist hier zwar im Detail anders - auf den ersten Blick vermeintlich günstiger. Nach genauerer Betrachtung aller Mischvorgänge gelangt man jedoch zur Vorhersage eines noch höheren Rauschpegels als bei der Schaltungsanordnung Fig. 4.

2. Die Aufgabe hinreichend genauer Entstör-Kompensationen ist hier schwieriger, weil bei denjenigen Mischvorgängen, die der Entstörung ungeradzahlig numerierter Nachbarkanäle dienen sollen (Kanalnumerierung vom Wunschsender zum Ensembleende hin, wobei der Wunschsender die Kanalnummer 1 hat), verfahrensbedingt das ganze eine Seitenband der Zweiseitenbandschwingung des übernächsten Kanals eingeschleppt wird. Dieses jeweils hereingeklappte ganze Seitenband des übernächsten Kanals wird zwar anschließend gelöscht, macht aber die Anstrengung einer exakten Löschung größer, als wenn nur Teile eines störenden Nachbar-Seitenbands zu eliminieren wären.

Wegen der systematischen Vollständigkeit der Gedanken der vorliegenden Erfindung und ihres Patentschutzes wurde dieses Verfahren dennoch in dieser Patentanmeldung belassen.

## Patentansprüche

1. Verfahren zum Entstören einer auszuwertenden Zweiseitenbandschwingung aus einem Gemisch mehrerer Zweiseitenbandschwingungen, bei denen das untere Seitenband der auszuwertenden Zweiseitenbandschwingung von dem ihm zugekehrten oberen Seitenband einer frequenztiefer unmittelbar benachbarten Zweiseitenbandschwingung ganz oder teilweise störend überlagert ist, oder das obere Seitenband der auszuwertenden Zweiseitenbandschwingung von dem ihm zugekehrten unteren Seitenband einer frequenzhöher unmittelbar benachbarten Zweiseitenbandschwingung ganz oder teilweise störend überlagert ist, oder beide Seitenbänder der auszuwertenden Zweiseitenbandschwingung von den ihnen zugekehrten Seitenbändern unmittelbar benachbarten Zweiseitenbandschwingungen ganz oder teilweise störend überlagert sind, wobei die Entstörung dadurch erfolgt, daß das untere Seitenband einer jeden Zweiseitenbandschwingung des Gemischs, deren oberes Seitenband störend das untere Seitenband der jeweils unmittelbar benachbarten Zweiseitenbandschwingung überlappt, und/oder das obere Seitenband einer jeden Zweiseitenbandschwingung des Gemischs, deren unteres Seitenband störend das obere Seitenband der jeweils unmittelbar benachbarten Zweiseitenbandschwingung überlappt, mittels Mischung oder mehrfacher Mischung in die Frequenzlage des gestörten unteren bzw. oberen Seitenbands der jeweiligen Zweiseitenbandschwingung umgesetzt und mit gleicher Amplitude, aber mit einem dem Vorzeichen des gestörten unteren bzw. oberen Seitenbands entgegengesetzten Vorzeichen zum jeweiligen Gemisch hinzuaddiert wird, wobei die Entstör-Kompensationen, d.h. die Additionen entgegengesetzten Vorzeichens der jeweils anderen Seitenbänder, nacheinander erfolgen und bei derjenigen Zweiseitenbandschwingung, die einen oder mehrere Kanalabstände entfernt sein kann, ihren Anfang nehmen, deren unteres oder oberes Seitenband von keinem, unmittelbar benachbarten Zweiseitenband störend überlagert ist, und wobei, nachdem dieses äunerste ungestörte Seitenband zur ersten Entstör-Kompensation benutzt worden ist, alle weiteren Entstör-Kompensationen das Ergebnis der jeweils vorausgegangenen Entstör-Kompensation nach entsprechender Frequenzumsetzung benutzen, das durch die vorausgegangene Entstör-Kompensation stets ein äußerstes störbefreites Seitenband enthält.

2. Verfahren zum Entstören einer auszuwertenden Zweiseitenbandschwingung aus einem Gemisch mehrerer Zweiseitenbandschwingungen, bei denen das untere Seitenband der auszuwertenden Zweiseitenbandschwingung von dem ihm zugekehrten oberen Seitenband einer frequenztiefer unmittelbar benachbarter Zweiseitenbandschwingung ganz oder teilweise störend überlagert ist, oder das obere Seitenband der auszuwertenden Zweiseitenbandschwingung von dem ihm zugekehrten unteren Seitenband einer frequenzhöher unmittelbar benachbarten Zweiseitenbandschwingung ganz oder teilweise störend überlagert ist, oder beide Seitenbänder der auszuwertenden Zweiseitenbandschwingung von den ihnen zugekehrten Seitenbändern unmittelbar benachbarter Zweiseitenbandschwingungen ganz oder teilweise störend überlagert sind, wobei die Entstörung dadurch erfolgt, daß das untere Seitenband einer jeden Zweiseitenbandschwingung des Gemischs, deren oberes Seitenband störend das untere Seitenband der jeweils unmittelbar benachbarten Zweiseitenbandschwingung überlappt, und/oder das obere Seitenband einer jeden Zweiseitenbandschwingung des Gemischs, deren unteres Seitenband störend das obere Seitenband der jeweils unmittelbar benachbarten Zweiseitenbandschwingung überlappt, mittels Mischung oder mehrfacher Mischung in die Frequenzlage des gestörten unteren bzw. oberen Seitenbandes der jeweiligen Zweiseitenbandschwingung umgesetzt und mit gleicher Amplitude, aber mit einem dem Vorzeichen des gestörten unteren bzw. oberen Seitenbandes entgegengesetzten Vorzeichen zum jeweiligen Gemisch hinzuaddiert wird, wobei die Entstör-Kompensationen, d.h. die Additionen entgegengesetzten Vorzeichens der jeweils anderen Seitenbänder, alle gleichzeitig erfolgen und die zur Entstör-Kompensation benutzten anderen Seitenbänder durch Frequenzumsetzung aus dem ursprünglichen Gemisch gewonnen werden.

3. Schaltungsanordnung zur Durchführung des Verfahrens nach Anspruch 1,
   dadurch gekennzeichnet,
   daß vier Mischer (Mi1 bis Mi4), denen jeweils ein Tiefpaß (TP1 bis TP4) vorgeschaltet ist, zusammen mit diesen Tiefpässen in Reihe geschaltet sind, wobei diese Mischer für vier zur auszuwertenden Zweiseitenbandschwingung frequenzhöher liegende, jeweils überlagerte Zweiseitenbandschwingungen (D bis G) vorgesehen sind,
   daß das die auszuwertende Zweiseitenbandschwingung (W) enthaltende Gemisch mehrerer Zweiseitenbandschwingungen (A bis G) dem ersten Tiefpaß (TP1) zugeführt wird und am Ausgang des vierten Mischers (Mi4) das weitgehend ungestörte obere Seitenband (Co) der auszuwertenden Zweiseitenbandschwingung abnehmbar ist,
   daß die Grenzfrequenz des ersten Tiefpasses (TP1) unmittelbar an das obere Seitenband (Go) der vierten oberhalb der auszuwertenden Zweiseitenbandschwingung liegenden Zweiseitenbandschwingung (G) anschließt,
   daß die Grenzfrequenz des zweiten Tiefpasses (TP2) mit der Trägerfrequenz ($f_{TF}$) der 3. frequenzhöheren Nachbar-Zweiseitenbandschwingung, des dritten Tiefpasses (TP3) mit der Trägerfrequenz ($f_{TE}$) der 2. frequenzhöheren Nachbar-Zweiseitenbandschwingung, des vierten Tiefpasses (TP4) mit der Trägerfrequenz ($f_{TD}$) der 1. frequenzhöheren Nachbar-Zweiseitenbandschwingung identisch ist, wobei gewisse Toleranzen zugelassen sind,
   daß jedem Mischer (Mi1 bis Mi4) jeweils eine Reihenschaltung aus einem um 90° verschiebenden Phasenschieber (P1 bis P4), einem Quadrierer (Q1 bis Q4) und einer Weiche (W1 bis W4) zugeordnet ist, wobei den Phasenschiebern jeweils eine der vier Seitenbandschwingungen (G,F, E,D) in absteigender Reihenfolge phasenrichtig zugeführt wird, wobei ferner jede Weiche den Gleichanteil der zugeordneten Zweiseitenbandschwingung zwecks getrennter Verarbeitung aussondert und wobei der die Zweiseitenbandschwingung aufweisende Ausgang jeder Weiche mit dem zweiten Eingang des zugeordneten Mischers verbunden ist, und
   daß jedem Mischer (Mi1 bis Mi4) jeweils ein den genannten Gleichanteil auf die Hälfte abschwächender Abschwächer (A1 bis A4) zugeordnet ist, dessen Eingang mit dem den Gleichanteil aufweisenden Ausgang der zugeordneten Weiche und dessen Ausgang mit dem zweiten Eingang des zugeordneten Mischers verbunden ist.

4. Schaltungsanordnung nach Anspruch 3,
   dadurch gekennzeichnet,
   daß als Mischer (Mi1 bis Mi4) Multiplizierer verwendet sind.

5. Schaltungsanordnung nach Anspruch 3 oder 4,
dadurch gekennzeichnet,
daß als Quadrierer (Q1 bis Q4) Multiplizierer verwendet sind, deren zwei Eingängen die phasenverschobene Trägerfrequenzschwingung zugeführt wird.

6. Schaltungsanordnung nach einem der Ansprüche 3 bis 5, dadurch gekennzeichnet,
daß die Abschwächer (A1 bis A4) einstellbar ausgebildet sind.

7. Schaltungsanordnung nach einem der Ansprüche 3 bis 6, dadurch gekennzeichnet,
daß anstelle der in die Phasenschieber (P1 bis P4) eingespeisten Trägerschwingungen der frequenzhöheren Zweiseitenbandschwingungen (G bis D) die Trägerschwingungen der in der Frequenz niedriger als die auszuwertende Zweiseitenbandschwingung (C) liegenden Zweiseitenbandschwingungen (A, B) in die Phasenschieber eingespeist werden, wobei dann am Ausgang des vierten Mischers (Mi4) das weitgehend ungestörte untere Seitenband (Cu) der auszuwertenden Zweiseitenbandschwingung abnehmbar ist.

8. Schaltungsanordnung zur Durchführung des Verfahrens nach Anspruch 1,
dadurch gekennzeichnet,
daß darin vier Tiefpässe (TP1 bis TP4), vier Mischer (Mi1 bis Mi4) und vier Summationseinrichtungen (S1 bis S4) vorgesehen sind, wobei an den jeweiligen Ausgang der Tiefpässe (TP1 bis TP4) ein Eingang eines Mischers (Mi1 bis Mi4) und ein Eingang einer Summationseinrichtung (S1 bis S4) angeschlossen sind,
daß ein zweiter Eingang der Summationseinrichtungen (S1 bis S4) jeweils mit dem Ausgang eines Mischers (Mi1 bis Mi4) und der jeweils eine Ausgang der drei ersten Summationseinrichtungen (S1 bis S3) mit dem jeweiligen Eingang des zweiten bis vierten Tiefpasses (TP2 bis TP4) verbunden sind,
daß die Mischer (Mi1 bis Mi4) für die zur auszuwertenden Zweiseitenbandschwingung (W) frequenzhöher liegende, jeweils überlagerte Zweiseitenbandschwingungen (D bis G) vorgesehen sind,
daß das die auszuwertende Zweiseitenbandschwingung (W) enthaltende Gemisch mehrerer Zweiseitenbandschwingungen (A bis G) dem ersten Tiefpaß (TP1) zugeführt wird und am Ausgang der letzten Summationseinrichtung (S4) das weitgehend ungestörte obere Seitenband (Wo) der auszuwertenden Zweiseitenbandschwingung abnehmbar ist,
daß die Grenzfrequenz des ersten Tiefpasses (TP1) unmittelbar an das obere Seitenband (Go) der vierten oberhalb der auszuwertenden Zweiseitenbandschwingung liegenden Zweiseitenbandschwingung (G) anschließt,
daß die Grenzfrequenz des zweiten Tiefpasses (TP2) mit der Trägerfrequenz ($f_{TF}$) der 3. frequenzhöheren Nachbar-Zweiseitenbandschwingung, des dritten Tiefpasses (TP3) mit der Trägerfrequenz ($f_{TE}$) der 2. frequenzhöheren Nachbar-Zweiseitenbandschwingung, des vierten Tiefpasses (TP4) mit der Trägerfrequenz ($f_{TD}$) der 1. frequenzhöheren Nachbar-Zweiseitenbandschwingung identisch ist, wobei gewisse Toleranzen zugelassen sind, und
daß jedem Mischer (Mi1 bis Mi4) jeweils eine Reihenschaltung aus einem Quadrierer (Q1 bis Q4) einem Amplitudenkonstanthalter (K1 bis K4) und einem Abschwächer (A1 bis A4) zugeordnet ist, wobei den Quadrierern (Q1 bis Q4) jeweils eine der Zweiseitenbandschwingungen (G,F,E,D) in absteigender Reihenfolge zugeführt wird.

9. Schaltungsanordnung zur Durchführung des Verfahrens nach Anspruch 1,
dadurch gekennzeichnet,
daß darin vier Tiefpässe (TP1 bis TP4) und vier dazwischen liegende Mischer (Mi1 bis Mi4), vier Summationseinrichtungen (S1 bis S4) sowie vier Regler (Re1 bis Re4) vorgesehen sind, wobei an den jeweils einen Ausgang der Tiefpässe (TP1 bis TP4) ein Eingang eines Mischers (Mi1 bis Mi4), ein Eingang einer Summationseinrichtung (S1 bis S4) und ein Eingang eines Reglers (Re1 bis Re4) angeschlossen sind,
daß ein zweiter Eingang der Summationseinrichtungen (S1 bis S4) jeweils mit dem Ausgang eines Mischers (Mi1 bis Mi4), der jeweils eine Ausgang der Summationseinrichtungen (S1 bis S4) mit einem zweiten Eingang der Regler (Re1 bis Re4) und ferner der jeweilige Ausgang der drei ersten Summationseinrichtungen (S1 bis S3) mit dem jeweiligen Eingang des zweiten bis vierten Tiefpasses (TP2 bis TP4) verbunden sind,
daß der Ausgang jedes Reglers (Re1 bis Re4) an den Eingang eines jeweils zugeordneten Regelverstärkers (RV1 bis RV4) angeschlossen ist, dessen Ausgang zum Schließen der Regelschleife mit einem zweiten Eingang des zugehörigen Mischers (Mi1 bis Mi4) verbunden ist,
daß die Mischer (Mi1 bis Mi4) für die zur auszuwertenden Zweiseitenbandschwingungen (W) frequenzhöher liegende, jeweils überlagerte Zweiseitenbandschwingungen (D bis G) vorgesehen sind, daß das die auszuwertende Zweiseitenbandschwingung (W) enthaltende Gemisch mehrerer Zweiseitenbandschwingungen (A bis G) dem ersten Tiefpaß (TP1) zugeführt wird und am Ausgang der letzten Summationseinrichtung (S4) das weitgehend ungestörte obere Seitenband (Wo) der auszuwertenden Zweiseitenbandschwingung abnehmbar ist,

daß die Grenzfrequenz des ersten Tiefpasses (TP1) unmittelbar an das obere Seitenband (Go) der vierten oberhalb der auszuwertenden Zweiseitenbandschwingung liegenden Zweiseitenbandschwingung (G) anschließt,

daß die Grenzfrequenz des zweiten Tiefpasses (TP2) mit der Trägerfrequenz ($f_{TF}$) der 3. frequenzhöheren Nachbar-Zweiseitenbandschwingung, des dritten Tiefpasses (TP3) mit der Trägerfrequenz ($f_{TE}$) der 2. frequenzhöheren Nachbar-Zweiseitenbandschwingung, des vierten Tiefpasses (TP4) mit der Trägerfrequenz ($f_{TD}$) der 1. frequenzhöheren Nachbar-Zweiseitenbandschwingung identisch ist, wobei gewisse Toleranzen zugelassen sind,

daß die Regler (Re1 bis Re4) jeweils die Abweichung von einer vollkommenen Kompensation ermitteln und in Abhängigkeit davon ein vorzeichengerechtes Signal als Stellgröße an die Regelverstärker (RV1 bis RV4) abgeben, wodurch der Verstärkungsfaktor des jeweiligen Regelverstärkers (RV1 bis RV4) derart verstellt wird, daß der Fehler der Kompensation Null ist, und

daß die den Mischern (Mi1 bis Mi4) vorgeschalteten Regelverstärker (RV1 bis RV4) über zweite Eingänge mit Quadrierern (Q1 bis Q4) verbunden sind, denen jeweils eine der Zweiseitenbandschwingungen (G,F,E,D) in absteigender Reihenfolge zugeführt wird.

**10.** Schaltungsanordnung nach Anspruch 9,
dadurch gekennzeichnet,
daß die Regler (Re1 bis Re4) zwei getrennte Multipliziereinrichtungen (Mu1, Mu2) aufweisen, die die Signale vor und hinter der jeweiligen Summationseinrichtung (S1 bis S4) aufnehmen und getrennt demodulieren, wobei zur Produktdemodulation jeweils die Trägerschwingung der zu löschenden Zweiseitenbandschwingung verwendet wird,
daß eine weitere Multipliziereinrichtung (Mu3) vorgesehen ist, die die' von den beiden Multipliziereinrichtungen (Mu1, Mu2) abgegebenen Schwingungsgemische aufnimmt und miteinander multipliziert, und
daß ein Tiefpaß vorgesehen ist, mit dem aus dem von der weiteren Multipliziereinrichtung (Mu3) abgegebenen Schwingungsgemisch der Gleichanteil aussiebbar ist, der nach Durchlaufen eines Zeitgliedes (PI) dann als Stellgröße verwendbär ist.

## Claims

1. A method to eliminate interference of a double-sideband oscillation from a mixture of severeal double-sideband oscillations, in the case of which the lower sideband of the double-sideband oscillation to be evaluated is superposed, in an interfering manner, completely or partly by the upper sideband, turned toward it, of a lower frequency adjacent double-sideband oscillation, or in the case of which the upper sideband of the double-sideband oscillation to be evaluated is superposed, in an interfering manner, completely or partly by the lower sideband, turned toward it, of a higher frequency adjacent double-sideband oscillation, or in the case of which both sidebands of the double-sideband oscillation to be evaluated are superposed, in an interfering manner, completely or partially by the adjacent two sideband oscillations of the sidebands turned toward them, achieving the elimination of the interference in the following way:
The lower sideband of each double-sideband oscillation of the mixture, the upper sideband of which overlaps, in an interfering manner, the lower sideband of the respective adjacent double-sideband oscillation, and/or the upper sideband of each double-sideband oscillation of the mixture, the lower sideband of which overlaps, in an interfering manner, the upper sideband of the respective adjacent double-sideband oscillation, is converted by mixing or multiple mixing in the frequency position of the interfered lower, respectively upper sideband of the respective double-sideband oscillation, and is added with the same amplitude, but with the opposite sign of the interfered lower sideband, respectively with the opposite sign of the interfered upper sideband, to the respective mixture, and these mentioned anti-interference compensations, i.e., the additions using the opposite sign of the respective other sideband occur successively and begin at that double-sideband oscillation being one or more channel spacings apart, the upper or lower sideband of which is not superposed, in an interfering manner, by an adjacent double-sideband, and, after this outermost uninterfered sideband has been used for the first anti-interference compensation, all further anti-interference compensations use the result of the previous anti-interference compensation after appropriate frequency conversion, the result always containing an outermost interference-free sideband due to the previous anti-interference compensation.

2. A method to eliminate interference of a double-sideband oscillation from a mixture of several double-sideband oscillations, in the case of which the lower sideband of the double-sideband oscillation to be evaluated is superposed, in an interfering manner, completely or partly by the upper sideband, turned toward it, of a lower frequency adjacent double-sideband oscillation, or in the case of which the upper sideband of the double-sideband oscillation to be evaluated is superposed, in an interfering manner, completely or partly by the lower sideband, turned toward it, of a higher frequency adjacent double-sideband oscillation, or in the case of which both sidebands of the double-sideband oscillation to be evaluated are superposed, in an interfering manner, completely or partially by the adjacent two sideband oscillations of the sidebands turned toward them, achieving the elimination of the interference in the following way:
The lower sideband of each double-sideband oscillation of the mixture, the upper sideband of which overlaps, in an interfering manner, the lower sideband of the respective adjacent double-sideband oscillation, and/or the upper sideband of each double-sideband oscillation of the mixture, the lower sideband of which overlaps, in an interfering manner, the upper sideband of the respective adjacent double-sideband oscillation, is converted by mixing or multiple mixing in the frequency position of the interfered lower, respectively upper sideband of the respective double-sideband oscillation, and is added with the same amplitude, but with the opposite sign of the interfered lower sideband, respectively with the opposite sign of the interfered upper sideband, to the respective mixture, and these mentioned anti-interference compensations, i.e., the additions using the opposite sign of the respective other sideband all take place at the same time, and the sidebands used in the anti-interference compensation are obtained by frequency conversion from the original mixture.

3. Circuit arrangement to perform the procedure according to claim 1,
characterized by the fact,
that four mixers (Mi1 to Mi4) provided for four superposed double-sideband oscillations (D to G) having a higher frequency than the double-sideband oscillation to be evaluated are each connected in series with a preceding low-pass (TP1 to TP4),
that the mixture of several double-sideband oscillations (A to G) containing the double-sideband oscillation (W) to be evaluated is supplied to the first low-pass (TP1) and that at the end of the fourth mixer (Mi4) the largely uninterfered upper sideband (Co) of the double-sideband oscillation to be evaluated can be accepted,
that the critical frequency of the first low-pass (TP1) connects directly to the upper sideband (Go) of the fourth double-sideband oscillation (G) above the double-sideband oscillation to be evaluated, that the critical frequency of the second low-pass (TP2) is identical to the carrier frequency ($f_{TF}$) of the third higher frequency neighbouring double-sideband oscillation, of the third low-pass (TP3) with the carrier frequency ($f_{TE}$) of the second higher frequency neighbouring double-sideband oscillation, of the fourth low-pass (TP4) with the carrier frequency ($f_{TD}$) of the first higher frequency adjacent double-sideband oscillation, that certain tolerances of the critical frequencies of the mentioned low-passes are permissible,
that each mixer (Mi1 to Mi4) is allocated a series connection from a phase shifter (P1 to P4) that shifts by 90°, a squarer (Q1 to Q4) and a frequency-separating network (W1 to W4),
that the phase shifters each receive one of the four sideband oscillations in descending, order (G,F, E,D), properly phased,
that, furthermore, each frequency-separating network filters out the d.c. proportion of the allocated double-sideband oscillation for separate processing,
that the exit of each frequency-separating network having the double-sideband oscillation is connected with the second input of the allocated mixer, and
that each mixer (Mi1 to Mi4) is allocated one attenuator (A1 to A4) reducing the d.c. proportion mentioned to half, the input of said attenuator being connected with the output of the allocated frequency-separating network delivering the d.c. proportion, and the output of which is connected to the second input of the associated mixer.

4. Circuit arrangement according to claim 3,
characterized by the fact,
that multiplicators are used as mixers (Mi1 to Mi4).

5. Circuit arrangement according to claim 3 or 4,
characterized by the fact,

that multiplicators are used as squarers (Q1 to Q4), the two inputs of which are supplied with the phase-shifted carrier frequency.

6. Circuit arrangement according to one of the claims 3 to 5,
characterized by the fact,
that the attenuators (A1 to A4) are designed to be adjustable.

7. Circuit arrangement according to one of the claims 3 to 6,
characterized by the fact,
that, instead of the carrier frequencies of the higher frequency double-sideband oscillations (G to D) fed into the phase shifters (P1 to P4), the carrier frequencies of the double-sideband oscillations (A, B) which have lower frequencies than the double-sideband oscillation (C) which is to be evaluated, are fed into the phase shifters, whereby then the largely uninterfered lower sideband (Cu) of the double-sideband oscillation to be evaluated can be accepted at the output of the fourth mixer (Mi4).

8. Circuit arrangement for performing the procedure according to claim 1,
characterized by the fact,
that in the procedure four low-passes (TP1 to TP4), four mixers (Mi1 to Mi4), and four summation devices (S1 to S4) are provided,
that at the respective output of the low-passes (TP1 to TP4) a mixer input (Mi1 to Mi4) and an input of a summation device (S1 to S4) are connected,
that a second input of the summation devices (S1 to S4) are each connected to an output of a mixer (Mi1 to Mi4) and one output for each of the first three summation devices (S1 to S3) is connected to the respective input of the second to the fourth low-pass (TP1 to TP4),
that the mixers (Mi1 to Mi4) are provided for the higher frequency, respectively superposed double sideband oscillations (D to G) for the double sideband oscillation (W) to be evaluated,
that the mixture of the several double-sideband oscillations (A to G) containing the double-sideband oscillation (W) to be evaluated is supplied to the first low-pass (TP1) and that, at the output of the last summation device (S4) the largely uninterfered upper sideband (Wo) of the double-sideband oscillation to be evaluated can be accepted, that the critical frequency of the first low-pass (TP1) connects directly to the upper sideband (Go) of the fourth double-sideband oscillation (G) positioned above the double-sideband oscillation to be evaluated,
that the critical fequency of the second low-pass (TP2) is identical to the carrier frequency ($f_{TF}$) of the third higher frequency neighbouring double-sideband oscillation, of the third low-pass (TP3) with the carrier frequency ($f_{TE}$) of the second higher frequency neighbouring double-sideband oscillation, of the fourth low-pass (TP4) with the carrier frequency ($f_{TD}$) of the first higher frequency adjacent double-sideband oscillation,
that certain tolerances of the critical frequencies of the mentioned low-passes are permissible,
that each mixer (Mi1 to Mi4) is allocated a series connection consisting of a squarer (Q1 to Q4), a constant amplitude stabilizer (K1 to K4), and an attenuator (A1 to A4), and
that one of the double-sideband oscillations (G,F, E,D) in descending order is each supplied to the squarers (Q1 to Q4).

9. Circuit arrangement for performing the procedure according to claim 1,
characterized by the fact,
that in the arrangement four low-passes (TP1 to TP4) and four intermediately located mixers (Mi1 to Mi4), four summation devices (S1 to S4) as well as four regulators (Re1 to Re4) are provided,
that at the one respective output of the low-passes (TP1 to TP4) an input of a mixer (Mi1 to Mi4), one input of a summation device (S1 to S4) and one input of a regulator (Re1 to Re4) are connected,
that a second input of the summation devices (S1 to S4) is connected to the one respective output of a mixer (Mi1 to Mi4), the one respective output of the summation devices (S1 to S4) is connected to a second input of the regulators (Re1 to Re4) and, furthermore, the respective output of the three first summation devices (S1 to S3) is connected with the respective input of the second to fourth low-pass (TP2 to TP4),
that the output of each regulator (Re1 to Re4) is connected with the input of a respective, allocated variable-gain amplifier (RV1 to RV4), the output of which is connected to a second input of the associated mixer (Mi1 to Mi4) to close the control loop,
that the mixers (Mi1 to Mi4) are provided for the higher frequency superposed double-sideband oscillations (D to G) for the double-sideband oscillations (W) to be evaluated, that the mixture of several double-sideband oscillations (A to G) containing the double-sideband oscillation (W) to be evaluated, is supplied to the first low-pass (TP1) and that, at the output of the last summation device (S4), the largely uninterfered upper sideband (Wo) of the double-sideband oscillation to be evaluated can be accepted, that the critical frequency of the first low-pass (TP1) connects directly to the upper sideband (Go) of the fourth double-sideband oscillation (G) above the double-sideband oscillation to be evaluated,

that the critical frequency of the second low-pass (TP2) is identical to the carrier frequency ($f_{TF}$) of the third higher frequency neighbouring double-sideband oscillation, of the third low-pass (TP3) with the carrier frequency ($f_{TE}$) of the second higher frequency neighbouring double-sideband oscillation, of the fourth low-pass (TP4) with the carrier frequency ($f_{TD}$) of the first higher frequency adjacent double-sideband oscillation,

that the regulators (Re1 to Re4) each determine the deviation from a compensation and, interdependently, send a signal, with the correct sign, as the correcting variable to the variable-gain amplifiers (RV1 to RV4), whereby the amplification factor of the respective amplifier (RV1 to RV4) is adjusted in such a way that the error of the compensation is zero, and

that the variable-gain amplifiers (RV1 to RV4) preceding the mixers (Mi1 to Mi4) are connected, via a second input, to the squarers (Q1 to Q4), each of which is supplied with one of the double-sideband oscillations (G,F, E,D) in descending order.

10. Circuit arrangement according to claim 9,
characterized by the fact,
that the regulators (Re1 to Re4) possess two separate multiplying devices (Mu1 to Mu2) which accept the signals before and after the respective summation device (S1 to S4) and demodulate them separately, using for product demodulation the carrier frequency of the double-sideband oscillation to be canceled, that another multiplying device (Mu3) is provided which accepts the oscillation mixture supplied by the two multiplying devices (Mu1 and Mu2), and which multiplies them by each other,
that a low-pass is provided, by means of which the d.c. proportion can be filtered out from the oscillation mixture supplied by the other multiplying device (Mu3), said d.c. proportion being used as an actuating value after passing through a time function element (PI).

**Revendications**

1.   Procédé pour éliminer les perturbations d'une oscillation à deux bandes latérales à évaluer dans un mélange de plusieurs oscillations à deux bandes latérales, dans lesquelles la bande latérale inférieure de l'oscillation à deux bandes latérales à évaluer est perturbée par la bande latérale supérieure d'une oscillation à deux bandes latérales adjacente d'une fréquence plus basse mais tout à fait voisine qui s'y superpose totalement ou partiellement, ou lorsque la bande latérale supérieure de l'oscillation à deux bandes latérales à évaluer est perturbée par la bande latérale inférieure d'une oscillation à deux bandes latérales adjacente d'une fréquence plus élevée mais tout à fait voisine qui s'y superpose totalement ou partiellement, ou lorsque les deux bandes latérales de l'oscillation à deux bandes latérales à évaluer sont perturbées totalement ou partiellement par les bandes latérales adjacentes des oscillations à deux bandes latérales adjacentes et où l'élimination de la perturbation est due au fait que la bande latérale inférieure de chaque oscillation à deux bandes latérales du mélange dont la bande latérale supérieure chevauche et perturbe la bande latérale inférieure de chaque oscillation à deux bandes latérales adjacente, et/ou la bande latérale supérieure de chaque oscillation à deux bandes latérales du mélange dont la bande latérale supérieure de l'oscillation à deux bandes latérales adjacente, à l'aide d'un mélange ou de mélanges multiples est convertie dans la position en fréquence de la bande latérale inférieure, respectivement supérieure de l'oscillation à deux bandes latérales concernée avec la même amplitude, mais avec un signe opposé à celui de la bande latérale perturbée inférieure, respectivement supérieure, et additionnée à ce mélange, auquel cas les compensations de la perturbation, c'est-à-dire les additions avec signe opposé de chaque autre bande latérale concernée, sont faites l'une après l'autre et pour les oscillations à deux bandes latérales, qui peuvent être distantes de plusieurs intervalles entre canaux, et prennent leur début là où la bande latérale inférieure ou supérieure n'est pas chevauchée de manière perturbatrice par aucune bande latérale voisine, en sorte qu'après utilisation de cette bande latérale la plus extérieure non perturbée pour la première compensation de perturbation, toutes les autres compensations de perturbation sont le résultat de la compensation de perturbation précédente après conversion de fréquence correspondante, qui par la compensation précédente de perturbation comporte toujours une bande latérale la plus extérieure, libre de perturbations.

2. Procédé pour éliminer les perturbations d'une oscillation à deux bandes latérales à évaluer dans un mélange de plusieurs oscillations à deux bandes latérales, dans lesquelles la bande latérale inférieure de l'oscillation à deux bandes latérales à évaluer est perturbée par la bande latérale supérieure d'une oscillation à deux bandes latérales adjacente d'une fréquence plus basse mais tout à fait voisine qui s'y superpose totalement ou partiellement, ou lorsque la bande latérale supérieure de l'oscillation à deux bandes latérales à évaluer est perturbée par la bande latérale inférieure d'une oscillation à deux bandes latérales adjacente d'une fréquence plus élevée mais tout à fait voisine qui s'y superpose totalement ou partiellement, ou lorsque les deux bandes latérales de l'oscillation à deux bandes latérales à évaluer sont perturbées totalement ou partiellement par les bandes latérales adjacentes des oscillations à deux bandes latérales adjacentes et où l'élimination de la perturbation est due au fait que la bande latérale inférieure de chaque oscillation à deux bandes latérales du mélange dont la bande latérale supérieure chevauche et perturbe la bande latérale inférieure de chaque oscillation à deux bandes latérales adjacente, et/ou la bande latérale supérieure de chaque oscillation à deux bandes latérales du mélange dont la bande latérale supérieure de l'oscillation à deux bandes latérales adjacente, à l'aide d'un mélange ou de mélanges multiples est convertie dans la position en fréquence de la bande latérale inférieure, respectivement supérieure de l'oscillation à deux bandes latérales concernée avec la même amplitude, mais avec un signe opposé à celui de la bande latérale perturbée inférieure, respectivement supérieure, et additionnée à ce mélange, auquel cas les compensations de la perturbation, c'est-à-dire les additions avec signe opposé de chaque autre bande latérale concernée, ont toutes lieu en même temps et les autres bandes latérales utilisées pour la compensation de la perturbation sont obtenues par conversion de fréquence au départ du mélange d'origine.

3. Circuit pour la mise en oeuvre du procédé selon la revendication 1,
   caractérisé
   en ce que quatre mélangeurs (Mil à Mi4), dont chacun est monté en amont à un filtre passe-bas (TP1 à TP4), sont connectés en série avec ces filtres passe-bas, ces mélangeurs sont prévus pour 4 oscillations à deux bandes latérales à une fréquence plus élevée que la bande latérale à évaluer et avec chevauchement (D à G),
   en ce que le mélange de plusieurs oscillations à deux bandes latérales (A à G) comprenant l'oscillation à deux bandes latérales à évaluer (W) est introduit dans le premier passe-bas (TP1) et que la bande latérale supérieure (Co) pratiquement sans perturbation de l'oscillation à deux bandes latérales à évaluer puisse être reprise à la sortie du quatrième mélangeur (Mi4,)
   en ce que la fréquence limite du premier filtre passe-bas (TP1) se raccorde directement à la bande latérale supérieure (Go) de la quatrième oscillation à deux bandes latérales (G) qui est la quatrième au-dessus de l'oscillation à deux bandes latérales à évaluer,
   en ce que la fréquence limite du deuxième filtre passe-bas (TP2) est identique à la fréquence porteuse ($f_{TF}$) de la troisième oscillation à deux bandes latérales voisine vers le haut, en ce que la fréquence du troisième filtre passe-bas (TP3) est identique à la fréquence porteuse ($f_{TE}$) de la deuxième oscillation à deux bandes latérales voisine vers le haut, en ce que la fréquence du quatrième filtre passe-bas (TP4) est identique à la fréquence porteuse ($f_{TD}$) de la première oscillation à deux bandes latérales voisines vers le haut, certaines tolérances étant toutefois admises, en ce que chaque mélangeur (Mi1 à Mi4) dispose d'une connexion série composée d'un déphaseur à 90°C (P1 à P4), d'un élévateur au carré (Q1 à Q4) et d'un aiguillage de fréquences (W1 à W4), les déphaseurs recevant chacun l'une des quatre oscillations à bande latérale (G, F, E, D) en ordre décroissant avec une phase correcte, de plus l'aiguillage de fréquences séparant la composante continue de l'oscillation à deux bandes latérales qui lui est attribuée dans le but d'un traitement séparé et la sortie de chaque aiguillage de fréquences présentant l'oscillation à deux bandes latérales étant reliée à la deuxième entrée du mélangeur correspondant, et
   en ce que chaque mélangeur (Mi1 à Mi4) se voit attribuer une des composantes continues mentionnées sur la moitié de l'atténuateur (A1 à A4), dont l'entrée est reliée à la sortie de l'aiguillage de fréquences qui présente la composante continue dont la sortie est reliée à la deuxième entrée du mélangeur correspondant.

4. Circuit selon la revendication 3,
   caractérisé
   en ce que des multiplicateurs sont utilisés en tant que mélangeurs (Mi1 à Mi4).

5. Circuit selon la revendication 3 ou 4,
   caractérisé

en ce que des multiplicateurs sont utilisés comme élévateurs au carré (Q1 à Q4), multiplicateurs dont les deux entrées reçoivent les oscillations de porteuses déphasées.

6. Circuit selon l'une des revendications 3 à 5,
caractérisé
en ce que les atténuateurs (A1 à A4) sont réglables.

7. Circuit selon l'une des revendications 3 à 6,
caractérisé
en ce qu'au lieu des ondes porteuses des oscillations à deux bandes latérales à fréquence plus haute (G à D) qui sont introduites dans les déphaseurs (P1 à P4), ce sont les ondes porteuses dans les fréquences plus basses que l'oscillation à deux bandes latérales à évaluer (C) et les oscillations à deux bandes latérales (A, B) qui sont transmises aux déphaseurs, alors que la sortie du quatrième mélangeur (Mi4) permet d'extraire la bande latérale inférieure (Cu), essentiellement non perturbée de l'oscillation à deux bandes latérales à évaluer.

8. Circuit pour la mise en oeuvre du procédé selon la revendication 1,
caractérisé
en ce que sont prévus quatre filtres passe-bas (TP1 à TP4), quatre mélangeurs (Mi1 à Mi4) et quatre dispositifs d'addition (S1 à S4) et qu'aux sorties des filtres passe-bas (TP1 à TP4) sont raccordées chaque fois une entrée d'un mélangeur (Mi1 à Mi4) et une entrée d'un dispositif d'addition (S1 à S4),
en ce qu'une seconde entrée des dispositifs d'addition (S1 à S4) est reliée à la sortie d'un mélangeur (Mi1 à Mi4) et que chaque fois une sortie des trois premiers dispositifs d'addition (S1 à S3) est reliée à l'entrée correspondante des deuxième au quatrième filtres passe-bas (TP2 à TP4), en ce que les mélangeurs (Mi1 à Mi4) sont prévus pour les oscillations à deux bandes latérales adjacentes (D à G) à une fréquence plus élevée que l'oscillation à deux bandes latérales à évaluer (W),
en ce que le mélange de plusieurs oscillations à deux bandes latérales (A à G) comprenant l'oscillation à deux bandes latérales à évaluer (W) est introduit dans le premier filtre passe-bas (TP1) et qu'il est possible d'extraire à la sortie du dernier dispositif d'addition (S4) la bande latérale supérieure (Wo) essentiellement non perturbée de l'oscillation de bande latérale à évaluer, en ce que la fréquence limite du premier filtre passe-bas (TP1) se raccorde directement à la bande latérale supérieure (Go) de l'oscillation à deux bandes latérales (G) de la quatrième oscillation à deux bandes latérales au-dessus de l'oscillation à deux bandes latérales à évaluer,
en ce que la fréquence limite du second filtre passe-bas (TP2) est identique à celle de l'onde porteuse ($f_{TF}$) de la troisième oscillation à deux bandes latérales voisine vers le haut, que la fréquence limite du troisième filtre passe-bas (TP3) est identique à celle de l'onde porteuse ($f_{TE}$) de la seconde oscillation à deux bandes latérales voisine vers le haut, que la fréquence limite du quatrième filtre passe-bas (TP4) est identique à celle de l'onde porteuse ($f_{TD}$) de la première oscillation à deux bandes latérales voisine vers le haut, certaines tolérances étant admises, et
en ce qu'il est associé à chaque mélangeur (Mi1 à Mi4) un circuit en série comprenant un élévateur au carré (Q1 à Q4), un stabilisateur d'amplitude (K1 à K4) et un atténuateur (A1 à A4), les élévateurs au carré (Q1 à Q4) étant alimentés par l'une des oscillations à deux bandes latérales (G, F, E, D) en ordre décroissant.

9. Circuit pour la mise en ouvre du procédé selon la revendication 1,
caractérisé
en ce que quatre filtres passe-bas (TP1 à TP4) et quatre mélangeurs intermédiaires (Mi1 à Mi4), quatre dispositifs d'addition (S1 à S4) ainsi que quatre régulateurs (Re1 à Re4) sont prévus, auxquels chaque fois une sortie des filtres passe-bas (TP1 à TP4), une entrée des mélangeurs (Mi1 à Mi4), une entrée de dispositifs d'addition (S1 à S4) et une entrée d'un régulateur (Re1 à Re4) sont raccordées, en ce qu'une seconde entrée des dispositifs d'addition S1 à S4 est raccordée à la sortie d'un mélangeur (Mi1 à Mi4), et de plus qu'une sortie des dispositifs d'addition (S1 à S4) est raccordée à une seconde entrée des régulateurs (Re1 à Re4) et de plus que chaque sortie des trois premiers dispositifs d'addition (S1 à S3) est reliée à l'entrée correspondante des deuxième au quatrième filtres passe-bas (TP2 à TP4),
en ce que la sortie de chaque régulateur (Re1 à Re4) est raccordée à l'entrée des amplificateurs de régulation correspondants (RV1 à RV4) dont la sortie est reliée, pour fermer la boucle de régulation, à une seconde entrée des mélangeurs correspondants (Mi1 à Mi4),
en ce que les mélangeurs (Mi1 à Mi4) sont prévus pour les oscillations à deux bandes latérales perturbées (D à G), voisines à une fréquence plus élevée que l'oscillation à deux bandes latérales à évaluer (W), en ce que le mélange d'oscillations à deux bandes latérales (A à G) qui comprend l'oscillation à deux bandes latérales à évaluer (W) est introduit dans le premier filtre passe-bas (TP1) et qu'à la sortie du dernier dispositif d'addition (S4), peut être extrait la bande latérale supérieure (Wo) en substance non perturbée de l'oscillation à deux bandes latérales à évaluer,

en ce que la fréquence limite du premier filtre passe-bas (TP1) est connectée directement à la bande latérale supérieure (Go) de la quatrième oscillation à deux bandes latérales (G) se trouvant au-dessus de l'oscillation à deux bandes latérales à évaluer,

en ce que la fréquence limite du deuxième filtre passe- bas (TP2) est identique à celle de l'onde porteuse $(f_{TF})$ de la troisième oscillation à deux bandes latérales voisines, vers le haut, celle du troisième filtre passe-bas (TP3) est identique à celle de l'onde porteuse $(f_{TE})$ de la deuxième oscillation à deux bandes latérales voisine vers le haut, celle du quatrième filtre passe-bas (TP4) à celle de l'onde porteuse $(f_{TD})$ de la première oscillation à deux bandes latérales voisines à fréquence plus élevée, certaines tolérances étant admises,

en ce que les régulateurs (Re1 à Re4) déterminent chaque fois l'écart d'une compensation parfaite et en fonction de cet écart transmettent un signal de signe correct en tant que grandeur réglante aux amplificateurs de régulation (RV1 à RV4), suite à quoi le facteur d'amplification de l'amplificateur concerné (RV1 à RV4) est réglé de manière telle que l'erreur de compensation est égale à zéro, et

en ce que les amplificateurs de régulation (RV1 à RV4) montés en amont des mélangeurs (Mi1 à Mi4) sont reliés par leur deuxième entrée aux élévateurs au carré (Q1 à Q4) auxquels l'une des oscillations à deux bandes latérales (G, F, E, D) est alimentée en un ordre descendant.

10. Circuit selon la revendication 9,
caractérisé

en ce que les régulateurs (Re1 à Re4) comprennent deux dispositifs de multiplication séparés (Mu1, Mu2) qui reçoivent les signaux en amont et en aval des dispositifs d'addition (S1 à S4) et les démodulent séparément, l'onde porteuse de la bande latérale à effacer servant à la démodulation de produit,

en ce qu'un dispositif de multiplication supplémentaire (Mu3) est prévu, qui reçoit les mélanges d'oscillations des deux dispositifs de multiplication (Mu1, Mu2) et les multiplie l'un par l'autre, et

en ce qu'un filtre passe-bas est prévu, à l'aide duquel la composante continue du mélange d'oscillations émis par le multiplicateur supplémentaire (Mu3) peut être séparée par filtrage, composante qui après être passée par un élément de temporisation (PI) peut être utilisé comme grandeur réglante.

FIG.1

FIG.5

25

FIG.2A
FIG.2B
FIG.2C
FIG.2D
FIG.2E
FIG.2F

FIG.3A FIG.3B FIG.3C FIG.3D FIG.3E FIG.3F

FIG.4

EP 0 559 716 B1

EP 0 559 716 B1

**Ensemble M** → TP1 $\approx$ → S1 → **M\*** → TP2 $\approx$ → S2 → **M\*\*** → TP3 $\approx$ → S3 → **M\*\*\*** → TP4 $\approx$ → S4 → **M\*\*\*\*** zum EB-Hoch-paß und zur Demodulation

Mi1 | Mi2 | Mi3 | Mi4

A1 — Ab-schwächer | A2 | A3 | A4

K1 — Amplituden-Konstanthalter | K2 | K3 | K4

$$\frac{g^2}{2}\cos(2\pi 2f_{TG}t + 2\varphi_{TG})$$

$$\frac{f^2}{2}\cos(2\pi 2f_{TF}t + 2\varphi_{TF})$$

$$\frac{e^2}{2}\cos(2\pi 2f_{TE}t + 2\varphi_{TE})$$

$$\frac{d^2}{2}\cos(2\pi 2f_{TD}t + 2\varphi_{TD})$$

FIG.6

Ensemble M

TP1 — Mi1 — Regel-verstärker RV1

$\dfrac{g^2}{2}\cos(2\pi\cdot 2f_{TG}+2\varphi_{TG})$

S1 — Re1 — Regler

M*

TP2 — Mi2 RV2

$\dfrac{f^2}{2}\cos(2\pi\cdot 2f_{TF}+2\varphi_{TF})$

S2 — Re2

M**

TP3 — Mi3 — RV3

$\dfrac{e^2}{2}\cos(2\pi\cdot 2f_{TE}+2\varphi_{TE})$

S3 — Re3

M***

TP4 — Mi4 — RV4

$\dfrac{d^2}{2}\cos(2\pi\cdot 2f_{TD}+2\varphi_{TD})$

S4 — Re4

M****

zum EB-Hoch-paß und zur Demodulation

FIG.7

Ensemble
vor Summationsstelle

Ensemble
nach Summationsstelle

Mu3

Mu2 — [×] — [≈] — [×] — [≈] — [×] — Mu1

Trägerschwingung

Trägerschwingung

[≈]

[PI] Zeitglied

FIG.8

Stellgröße
Regelspannung

zum Regelverstärker